# FASCICULE DE BREVET EUROPEEN

(11) **EP 3 755 569 B1**
(45) Date de publication et mention de la délivrance du brevet: **03.11.2021**
(21) Numéro de dépôt: 19711962.1
(22) Date de dépôt: 19.02.2019
(51) Int. Cl.: B60L 9/30, B60L 9/22, B60L 9/28, B60L 15/00, H02M 1/10, H02M 3/335, H02M 5/458, H02M 7/49, H02P 27/14, H02M 7/493, H02M 1/00

(54) **SYSTEME EMBARQUE DE CONVERSION DE PUISSANCE ELECTRIQUE**
BORDNETZ ZUR UMWANDLUNG ELEKTRISCHER ENERGIE
ON-BOARD SYSTEM FOR CONVERTING ELECTRICAL POWER

(30) Priorité: 21.02.2018 FR 1851466
(43) Date de publication de la demande: 30.12.2020
(73) Titulaire: Supergrid Institute, 69100 Villeurbanne (FR); Ecole Centrale de Lyon, 69130 Ecully (FR)
(72) Inventeur: DWORAKOWSKI, Piotr, 69150 Decines (FR); STACKLER, Caroline, 69100 Villeurbanne (FR); MOREL, Florent, 0100 Bourg-en-Bresse (FR); LADOUX, Philippe, 31280 Dremil Lafage (FR)
(74) Mandataire: Cabinet Beau de Loménie
(86) Numéro de dépôt international: PCT/FR2019/050370
(87) Numéro de publication internationale: WO 2019/162608

(56) Documents cités:
- EP-A2- 1 520 746
- WO-A1-2012/025255
- WO-A2-2012/028640

## Description

L'invention concerne le domaine des systèmes embarqués de conversion de puissance électrique sous moyenne tension pour un engin mobile de transport, notamment pour les locomotives électriques, les tramways et les trolleybus.

L'invention trouvera donc une application particulièrement intéressante dans le domaine du matériel ferroviaire, donc des trains, tramways, ou métros à traction électrique.

L'invention s'applique aux engins mobiles de transport à traction électrique qui tirent leur puissance électrique nécessaire à la traction, et éventuellement en plus pour l'alimentation de fonctions auxiliaires (chauffage, climatisation, éclairage de bord, actionneurs auxiliaires, contrôle) d'une source d'électricité externe à laquelle l'engin est relié en permanence par le biais d'un contact linéique fixe par exemple une caténaire, ou autre ligne de contact aérienne, ou un rail d'alimentation qui peut être fixé au sol. Le contact linéique fixe est donc agencé tout le long d'un trajet prévu pour l'engin de transport et ce dernier, lors d'un déplacement, suit le contact linéique et reste en contact mécanique et électrique permanent avec lui pour en tirer la puissance électrique nécessaire à son déplacement.

Pour ce faire, l'engin de transport comporte un premier circuit de connexion électrique qui comprend, en amont, au moins un contact embarqué capable de venir en contact mécanique et électrique avec le contact linéique fixe. Pour un train à traction électrique, le contact embarqué se présente souvent sous la forme d'un archet monté à l'extrémité d'un pantographe monté sur le toit de la locomotive, pour venir en contact contre le fil d'alimentation d'une caténaire.

Dans certains cas, les réseaux de chemin de fer sont alimentés, par le contact linéique fixe, en moyenne tension alternative, c'est-à-dire avec une tension alternative dont la valeur nominale de crête est comprise entre 1000 volts et 50.000 volts, par exemple 15.000 volts RMS ou 25.000 volts RMS.

Par ailleurs, pour certaines lignes de chemin de fer, il existe des contacts linéiques fixes alimentés en tension continue, avec une tension nominale continue qui peut par exemple être de 1.500 volts ou 3.000 volts. Dans ce cas, avec une tension continue inférieure ou égale à 3.000 volts, les engins de transports peuvent être conçus pour que leur système de traction électrique utilise directement la tension de la caténaire. Une telle disposition est mise en œuvre dans les locomotives de type BB-2700 produites par la société ALSTOM et exploitées par la Société nationale des chemins de fer français (SNCF). Les documents WO2012025255, WO2012/028640 décrivent tous les deux des systèmes de conversion de puissance pouvant être utilisés avec une alimentation alternative ou avec une alimentation continue, dans lesquels, dans le cas l'alimentation continue, la tension continue est amenée directement et sans conversion sur le système de traction électrique.

Cependant, on envisage l'apparition de lignes alimentées en tension continue avec des valeurs nominales supérieures à 3.000 volts, notamment supérieure à 5.000 volts, pouvant aller jusqu'à 10.000 volts de valeur nominale, voire 50.000 volts de valeur nominale. La conception actuelle des systèmes de traction électrique ne permet pas d'exploiter directement de telles tensions de réseau.

On comprend qu'il peut y avoir intérêt, au moins dans certains cas, à ce que les engins de transports puissent fonctionner en étant alimentés soit par une première source fixe de tension électrique fournissant une moyenne tension alternative, soit par une seconde source fixe de tension électrique fournissant une moyenne tension continue. Ainsi, l'engin de transport pourra être exploité soit sur des lignes alimentées en moyenne tension continue, soit sur des lignes alimentées en moyenne tension alternative.

Le document EP-1.520.746 décrit un système de conversion de puissance pouvant être utilisé avec une alimentation alternative ou avec une alimentation continue. Ce système comporte un transformateur d'entrée, qui se trouve en amont de la conversion dans la configuration utilisée pour l'alimentation alternative. Au contraire, en configuration d'alimentation par courant continu, un jeu d'interrupteurs est mis en œuvre pour reconfigurer le circuit de manière à intercaler le bobinage secondaire du transformateur entre l'étage haute tension et le convertisseur de traction. Dans la configuration d'alimentation par tension alternative, l'étage haute tension fonctionne comme un redresseur, donc comme un convertisseur alternatif/continu. Dans la configuration d'alimentation en tension continue, le même étage haute tension fonctionne comme un convertisseur de tension statique, donc comme un convertisseur continu/continu. Ainsi, dans ce système, le convertisseur haute tension change de mode de fonctionnement en fonction de l'alimentation en continu ou en alternatif.

Il existe aujourd'hui de nombreuses topologies pour la réalisation de système de conversion de puissance utilisables dans les engins de transport. On trouvera une compilation des différentes topologies qui ont déjà été proposées dans les documents suivants :
Dujic 2012 : « Power Electronic Transformer Technology for Traction Applications - An Overview", Dražen Duji•, Frederick Kieferndorf, and Francisco Canales, ELECTRONICS, VOL. 16, NO. 1, JUNE 2012, DOI: 10.7251/ELS1216050D;
Farnesi 2016 : "Advances in Locomotive Power Electronic Systems Directly Fed Through AC Lines", Stefano Farnesi, Mario Marchesoni and Luis Vaccaro, 2016, International Symposium on Power Electronics, Electrical Drives, Automation and Motion, IEEE, pp. 657-664;
Feng 2017 : "Power Electronic Transformer-Based Railway Traction Systems: Challenges and Opportunities", Jianghua Feng, W. Q. Chu, , Zhixue Zhang, Z. Q. Zhu, IEEE Journal of Emerging and Selected Topics in Power Electronics (Volume: 5, Issue: 3, Sept. 2017, pp. 1237 - 1253), DOI : 10.1109/JESTPE.2017.2685464.

Par ailleurs, le document EP-0.989.016 décrit un système embarqué de conversion capable de fonctionner, dans une première configuration, sous tension alternative, et, dans une seconde configuration, sous tension continue.

Ce système embarqué de conversion de puissance comporte plusieurs tranches de conversion ayant chacune un étage de conversion de puissance alternative-continue relié électriquement, par un côté amont, au premier circuit de connexion. L'étage amont permet ainsi de transformer la tension alternative du contact linéique fixe en tension continue.

La présence de plusieurs tranches de conversion permet, en interposant le côté amont de chaque tranche de conversion successivement en série dans le premier circuit de connexion, de soumettre chaque tranche de conversion à une tension qui est une fraction de la tension de réseau. Cela permet notamment de ne pas utiliser de transformateur abaisseur de tension fonctionnant à la fréquence de la tension du système d'alimentation à tension alternative et d'utiliser des composants électroniques qui ne peuvent pas supporter des tensions aussi élevées que celles du système d'alimentation moyenne tension. On comprend que le nombre de tranches de conversion du système est choisi en fonction de la plus haute valeur de crête de la tension de réseau alternative avec laquelle l'engin est susceptible d'être exploité. Pour des valeurs faibles de cette tension alternative la plus haute, ou pour des composants pouvant supporter de plus fortes tensions que ceux actuellement disponibles, on peut envisager une topologie n'ayant qu'une tranche de conversion.

Dans le document EP-0.989.016, un jeu d'interrupteurs permet de transformer le premier circuit de connexion en deuxième circuit de connexion pour passer de la configuration sous tension alternative à la configuration sous tension continue, et inversement. Dans la configuration sous tension alternative, les étages de conversion de puissance alternative-continue sont connectés électriquement en série, par leur côté amont, dans le premier circuit de connexion. Au contraire, dans la configuration sous tension continue, le second circuit de connexion comporte plusieurs branches, électriquement en parallèle l'une de l'autre, et, pour chaque branche de tranches de conversion, les étages aval de conversion de puissance continue-continue isolés sont connectés électriquement en série, par leur côté amont, dans la branche correspondante du second circuit de connexion. Pour les tranches de conversion appartenant à cette branche, les étages de conversion de puissance alternative-continue sont connectés électriquement en série dans ladite branche du circuit de connexion.

On comprend donc que, dans les deux configurations, la tension du réseau passe par les étages de conversion de puissance alternative-continue, y compris si cette tension est continue.

Un tel système peut fonctionner, en utilisant les interrupteurs électroniques de l'étage AC-DC, les interrupteurs électroniques étant, en fonction de la tension de caténaire, soit forcés ouverts, soit forcés fermés, soit commandés en fonctionnement hacheur. Bien que possible, ce fonctionnement n'est pas idéal : il entraîne des pertes dans le convertisseur d'entrée et son éventuel surdimensionnement. De plus, avec un tel système, le dimensionnement des inductances d'entrée, de manière à fonctionner d'une part en tension alternative et d'autre part en tension continue, est contraignant et peut ne pas permettre un fonctionnement optimal dans les deux modes de fonctionnement.

L'invention vise donc à proposer un nouveau système embarqué de conversion de puissance qui permette à un engin mobile à traction électrique de fonctionner indifféremment avec une alimentation alternative ou continue, en optimisant l'utilisation des composants électroniques mis en œuvre pour optimiser le coût et l'encombrement du système.

Dans ce but, l'invention propose un système embarqué de conversion de puissance électrique sous moyenne tension pour un engin mobile de transport comportant un système de traction embarqué ayant au moins un moteur électrique de traction, tel que défini par la revendication 1.

Selon d'autres caractéristiques optionnelles de l'invention, prises seules ou en combinaison :
- Pour deux tranches de conversion pour lesquelles les étages aval de conversion de puissance continue-continue isolés sont connectés électriquement consécutivement en série dans le second circuit de connexion, un interrupteur électrique peut être interposé dans le second circuit de connexion entre deux tranches.
- Pour les tranches de conversion appartenant à une même série, les étages amont de conversion de puissance alternative-continue sont connectés consécutivement électriquement en série dans le premier circuit de connexion, et, pour deux tranches de conversion appartenant à deux séries distinctes mais pour lesquelles les étages amont de conversion de puissance alternative-continue sont connectés consécutivement électriquement en série dans le premier circuit de connexion, un interrupteur électrique peut être interposé dans le premier circuit de connexion entre les deux tranches de conversion.

- Le système embarqué de conversion peut comporter plusieurs tranches de conversion ayant chacune un étage amont de conversion de puissance alternative-continue et un étage aval de conversion de puissance continue-continue isolé, et plusieurs des étages, ou tous les étages aval de conversion de puissance continue-continue isolés peuvent être connectés entre eux électriquement en parallèle par leur côté aval.
- Le premier circuit de connexion peut comporter un premier contact embarqué dédié pour la connexion à la première source de tension, et le second circuit de connexion peut comporter un second contact embarqué dédié pour la connexion à la seconde source de tension, distinct du premier contact embarqué.
- Le premier circuit de connexion et le second circuit de connexion peuvent comporter un contact embarqué commun pour la connexion à l'une ou l'autre de la première ou de la seconde source de tension.
- Le second circuit de connexion peut comporter des moyens d'interruption du courant électrique entre le contact embarqué et l'ensemble des tranches de conversion du système embarqué de conversion qui sont reliées au second circuit de connexion.
- Le premier circuit de connexion et le second circuit de connexion peuvent comporter un filtre électrique commun.
- Le premier circuit de connexion et le second circuit de connexion peuvent comporter chacun au moins un filtre électrique dédié distinct.
- Le système embarqué de conversion peut être prévu pour être relié à une source de tension monophasée.
- Chaque étage amont de conversion de puissance alternative-continue et chaque étage aval de conversion de puissance continue-continue isolé comporte chacun un côté amont, avec des bornes amont et un côté aval, avec des bornes aval, et, dans une tranche de conversion, les bornes aval de l'étage amont de conversion de puissance alternative-continue sont reliées chacune respectivement à une des bornes amont de l'étage aval de conversion de puissance continue-continue isolé de la tranche de conversion correspondante.
- Pour chaque tranche de conversion, un filtre électrique peut être agencé électriquement en parallèle de deux bornes amont du côté amont de l'étage aval de conversion de puissance continue-continue isolé.
- Pour chaque tranche de conversion, l'étage aval de conversion de puissance continue-continue isolé peut être réalisé sous la forme de l'association :
   - en amont, d'un convertisseur primaire continu-alternatif ayant un côté amont continu, formant le côté amont de l'étage aval de conversion de puissance continue-continue isolé, et un côté aval alternatif;
   - d'un transformateur ayant un bobinage primaire, connecté au côté aval du convertisseur primaire et un bobinage secondaire,
   - en aval, un convertisseur secondaire ayant un côté amont alternatif connecté au bobinage secondaire du transformateur, et un côté aval continu qui forme le côté aval de l'étage aval de conversion de puissance continue-continue isolé.
- Le système embarqué peut comporter plusieurs tranches de conversion ayant chacune un étage aval de conversion de puissance continue-continue isolé, et au moins deux tranches de conversion peuvent avoir chacune un étage aval de conversion de puissance continue-continue isolé qui partage, avec l'autre étage aval de conversion de puissance continue-continue isolé, le convertisseur secondaire et le bobinage secondaire du transformateur, tout en ayant chacun leur propre convertisseur primaire.
- Le système peut être réversible pour transmettre de la puissance électrique, dans un sens moteur, de la source de tension vers le système de traction et, dans un sens inverse générateur, du système de traction vers la source de tension.

Diverses autres caractéristiques ressortent de la description faite ci-dessous en référence aux dessins annexés qui montrent, à titre d'exemples non limitatifs, des formes de réalisation de l'objet de l'invention.

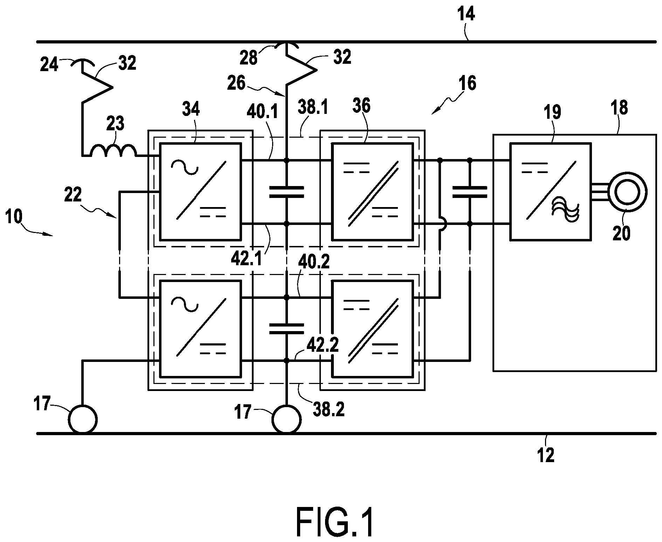

Les **Figures 1** à **5** sont des vues schématiques de principe de différents modes de réalisation d'un système de conversion de puissance pour un engin mobile de transport selon l'invention, avec des variantes concernant la conception du second circuit de connexion.

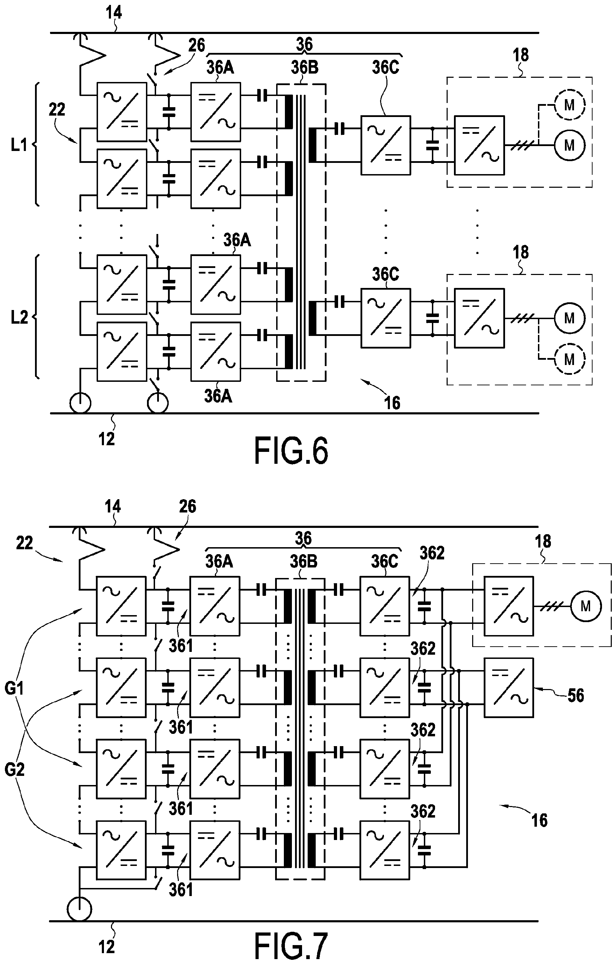

Les **Figures 6** à **10** sont des vues schématiques de principe de différents modes de réalisation d'un système de conversion de puissance pour un engin mobile de transport selon l'invention, avec des variantes sur la réalisation des étages de conversion amont et/ou aval, qui peuvent être combinées avec l'une ou l'autre des variantes concernant la conception du second circuit de connexion illustrée aux **Figs. 1** à **5****.**

L'invention concerne un système embarqué **16** de conversion de puissance électrique sous moyenne tension pour un engin mobile de transport **10** comportant un système de traction embarqué **18** ayant au moins un moteur électrique de traction **20.**

L'invention sera plus particulièrement décrite dans le cadre de son application à une locomotive de train à traction électrique. Elle est cependant par ailleurs applicable de manière plus générale dans le domaine du matériel ferroviaire, donc aussi applicable à des tramways, ou à des métros à traction électrique. Elle peut encore être mise en œuvre pour des trolleybus, ou plus généralement pour tout engin de transport comportant un moteur électrique de traction embarqué qui reçoit l'énergie nécessaire au déplacement de l'engin par le biais d'un contact embarqué sur l'engin et venant en contact avec un contact linéique fixe relié à une source fixe de tension électrique de réseau.

Sur la **Fig. 1****,** on a illustré de manière très schématique un engin mobile **10** qui, dans cet exemple de réalisation, est destiné à circuler sur des rails **12** d'une voie de chemin de fer, et qui est destiné être alimenté par contact avec un contact linéique fixe **14** qui peut prendre la forme par exemple d'une caténaire, ou de tout autre type de ligne de contact aérienne. L'invention peut aussi être mise en œuvre avec un contact linéique fixe sous la forme d'un rail d'alimentation qui peut être fixé au sol. De préférence, le contact linéique fixe **14** est continu et s'étend sur une distance égale à la distance de déplacement de l'engin mobile **10,** entre un point de départ de l'engin et un point d'arrivée de l'engin. Bien entendu, le contact linéique fixe **14** peut être réalisé sous la forme de plusieurs éléments successifs raccordés électriquement entre eux. Des discontinuités de contact ponctuelles peuvent être acceptables, notamment aux jonctions entre de tels éléments successifs. De telles discontinuités de contact ponctuelles n'empêchent pas que l'on considère le contact comme étant un contact permanent.

Le contact linéique fixe **14** est donc relié à une source fixe de tension électrique de réseau. L'invention sera décrite dans le cas où la source de tension électrique est une source monophasée. Dans ce cas, le contact linéique fixe **14** peut comporter un unique conducteur électrique s'étendant sur l'étendue du contact linéique fixe **14.** Dans le cas où la source de tension électrique est une source à phases multiples, par exemple triphasée, le contact linéique fixe peut alors comporter plusieurs conducteurs parallèles.

Dans l'invention, l'engin mobile **10** doit pouvoir être alimenté le long d'un trajet défini par l'étendue d'un tel contact linéique fixe **14,** dans au moins deux configurations.

Dans une première configuration pour tension alternative, le contact linéique fixe est relié à une première source fixe de tension électrique de réseau, fournissant une moyenne tension alternative. Une telle tension alternative présente une valeur nominale de crête qui est par exemple comprise entre 1.000 volts et 50.000 volts. Dans certains cas, la tension alternative est définie par sa valeur RMS, par exemple 15.000 volts RMS ou 25.000 volts RMS. La fréquence de la tension alternative est par exemple comprise entre 10 et 100 hertz, les valeurs les plus fréquentes étant de 16,7 Hz, de 50 Hz ou de 60 Hz.

Dans une seconde configuration pour tension continue, le contact linéique fixe **14** est relié à une seconde source fixe de tension électrique de réseau, fournissant une moyenne tension continue, avec une valeur nominale supérieure à 500 volts, mais de préférence supérieure à 3.000 volts, notamment supérieure à 5.000 volts, pouvant aller jusqu'à 10.000 volts de valeur nominale, voire 50.000 volts de valeur nominale.

On comprend bien entendu que, dans une application pratique, un contact linéique fixe **14** donné est toujours relié à la même source fixe de tension électrique de réseau. C'est l'engin mobile **10** qui, au cours de ses déplacements, peut être amené à se déplacer le long d'un premier trajet déterminé par un premier contact linéique fixe relié à une première source de tension électrique de réseau, puis le long d'un second trajet déterminé par un second contact linéique fixe relié à une seconde source de tension électrique de réseau. Dans la plupart des cas, l'engin mobile **10** ne pourra se connecter, à un instant donné, qu'à un seul contact linéique fixe relié à une source de tension électrique de réseau donnée. Il est toutefois possible que, par exemple au niveau d'une station d'interface, sur une portion de trajet généralement très limitée, l'engin mobile **10** puisse se connecter indifféremment à un premier ou à un deuxième contact linéique fixe qui s'étendraient parallèlement l'un à l'autre le long de cette portion de trajet. En variante, il peut être prévu une zone de transition le long de laquelle l'engin mobile n'est pas alimenté et le long de laquelle il peut par exemple se déplacer par inertie ou en étant déplacé par des moyens extérieurs et/ou grâce à une énergie stockée dans le véhicule.

L'engin mobile **10** comporte donc un système embarqué de conversion puissance électrique **16** qui est embarqué dans l'engin mobile **10.** Comme on le verra plus en détail plus loin, le système embarqué de conversion de puissance électrique **16** comporte deux circuits de connexion électrique **22, 26** par lesquels, lors d'un déplacement de l'engin mobile de transport, le système embarqué de conversion **16** est, par un côté amont, en contact mécanique et électrique permanent, soit, dans une configuration pour tension alternative, avec un contact linéique fixe relié à une source de tension alternative, soit, dans une configuration pour tension continue, avec un contact linéique fixe relié à une source de tension continue.

De manière connue, les circuits de connexion électrique **22, 26** du système embarqué de conversion de puissance **16** comportent également une portion retour, par exemple sous la forme d'une liaison électrique avec un potentiel électrique neutre. Dans le cas d'un engin ferroviaire, qui sera le cas illustré dans les figures, cette portion retour du circuit de connexion comporte la plupart du temps un contact électrique entre une roue **17** de l'engin mobile **10** et le rail **12,** ce dernier étant relié électriquement à la terre, donc à un potentiel neutre. Cependant, on peut dans tous les cas envisager, comme cela se fait dans les infrastructures dédiées à des trolleybus, que la portion retour du circuit de connexion soit réalisée sous la forme d'un second contact linéique fixe, sous la forme d'un fil aérien ou d'un rail, qui peut par exemple s'étendre en parallèle du contact linéique fixe relié à la source de tension électrique.

On comprend bien que le contact linéique fixe **14,** la première source fixe et la seconde source fixe de tension électrique ne font pas partie du système embarqué de conversion **16,** ni de l'engin mobile de transport **10.** Ces éléments font partie d'une infrastructure de réseau de transport. Ces éléments sont fixes en ce qu'ils ne se déplacent pas avec l'engin mobile **10.**

Le rôle principal du système de conversion puissance **16** est, à partir de la tension du contact linéique fixe **14,** de délivrer, en aval, une tension continue de traction à un système de traction **18.** Ceci se produit lorsque l'engin mobile **10** fonctionne en mode moteur. Toutefois, le système embarqué de conversion de puissance **16** sera de préférence électriquement réversible, ce qui sera utile lorsque l'engin mobile **10** fonctionne dans un mode de freinage régénératif au cours duquel le moteur électrique de traction **20** est utilisé en tant que génératrice électrique, transformant l'énergie cinétique de l'engin mobile **10** en une énergie électrique qui peut, via le système embarqué de conversion de puissance **16,** transmettre de la puissance électrique du système de traction **18** vers la source de tension, par l'intermédiaire du contact linéique fixe **14.**

Par convention, on considère que, en mode moteur, une puissance électrique est transférée dans un sens moteur d'amont en aval depuis un côté amont du système embarqué de conversion **16** qui est relié au contact linéique fixe **14**, vers le système de traction **18** qui est relié électriquement à un côté aval du système embarqué de conversion **16**. Les notions de « amont » et « aval » correspondent donc à ce mode de fonctionnement moteur. Dans le mode de fonctionnement régénératif, la puissance électrique est donc transférée de l'aval vers l'amont, depuis un côté aval du système embarqué de conversion de puissance **16** qui est relié au système de traction **18**, vers le côté amont du système embarqué de conversion de puissance **16** qui est relié électriquement au contact linéique fixe **14**.

Le système de traction **18** de l'engin mobile **10** est un système comportant au moins un moteur électrique de traction **20** qui tire sa puissance électrique du système embarqué de conversion **16** et qui provoque le déplacement de l'engin mobile **10**. Le moteur électrique de traction **20** peut être de tous type approprié, notamment de tout type habituellement mis en œuvre dans les engins de transport à traction électrique. Dans l'exemple illustré à la **Fig. 1**, le moteur électrique de traction **20** est un moteur à courant alternatif triphasé. De la sorte, dans ce cas, le système de traction **18** comporte un convertisseur de puissance électrique continue-alternative **19** dont un côté amont est relié électriquement au côté aval du système embarqué de conversion puissance 16, et dont un côté aval est relié électriquement au moteur électrique de traction **20**. Toutefois, le moteur électrique **20** pourrait aussi être un moteur à courant continu. De préférence, le système de traction **18** comporte une unité électronique de commande de son fonctionnement (non représentée). Dans certains cas, le système de traction **18** pourra comporter plusieurs moteurs électriques de traction alimentés chacun par le même système embarqué de conversion de puissance **16**. Chacun de ces moteurs peut être relié électriquement au système embarqué de conversion puissance **16** par un convertisseur de puissance électrique **19** propre à ce moteur, ou par un convertisseur de puissance **19** partagé avec d'autres moteurs.

On note par ailleurs que la puissance électrique délivrée en aval par le système embarqué de conversion puissance **16** peut être utilisée par d'autres équipements électriques de l'engin mobile **10,** par exemple un chauffage, une climatisation, un éclairage de bord et/ou de circulation, des actionneurs auxiliaires, des unités électroniques de contrôle, etc.

Le système embarqué de conversion de puissance **16** comporte, dans la configuration pour tension alternative, un premier circuit de connexion électrique **22** comprenant, en amont, au moins un contact embarqué **24** capable de venir en contact mécanique et électrique avec le contact linéique fixe qui correspond à la configuration pour tension alternative. C'est aux bornes de ce premier circuit de connexion électrique **22** qu'est appliquée la première tension électrique de réseau alternative. Le premier circuit de connexion électrique **22** permet d'alimenter le système sous tension alternative pour permettre le déplacement de l'engin mobile **10,** et applique cette tension à une ou plusieurs tranches de conversion de puissance du système **16**. Le premier circuit de connexion électrique **22** comprend généralement une première inductance de charge **23**. Cette inductance peut être remplacée par un filtre électrique consistant en un arrangement de condensateurs, d'inductances et/ou de résistances.

Le système embarqué de conversion de puissance **16** comporte, dans la configuration pour tension continue, un second circuit de connexion électrique **26** comprenant, en amont, au moins un contact embarqué **28** capable de venir en contact mécanique et électrique avec le contact linéique fixe **14** relié à la seconde source fixe de tension électrique de réseau.

On comprendra que, sur la **Fig. 1**, on a illustré l'engin mobile **10** dans une configuration pour tension continue de telle sorte que c'est le second circuit de connexion électrique **26** qui est en contact électrique permanent avec le contact linéique fixe **14,** tout au moins lors d'un déplacement de l'engin mobile **10** le long de ce contact linéique fixe **14,** lequel est donc considéré comme étant relié à la seconde source fixe de tension électrique continue. A contrario, on voit que, dans cet exemple et dans cette configuration, le premier circuit de connexion électrique **22** n'est pas électriquement en contact avec le contact linéique fixe **14** qui est représenté.

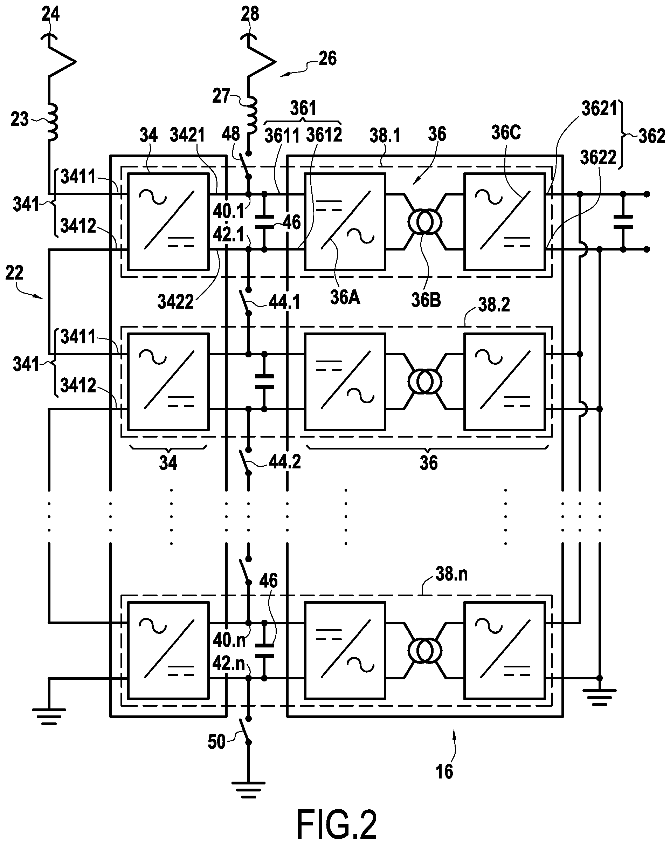

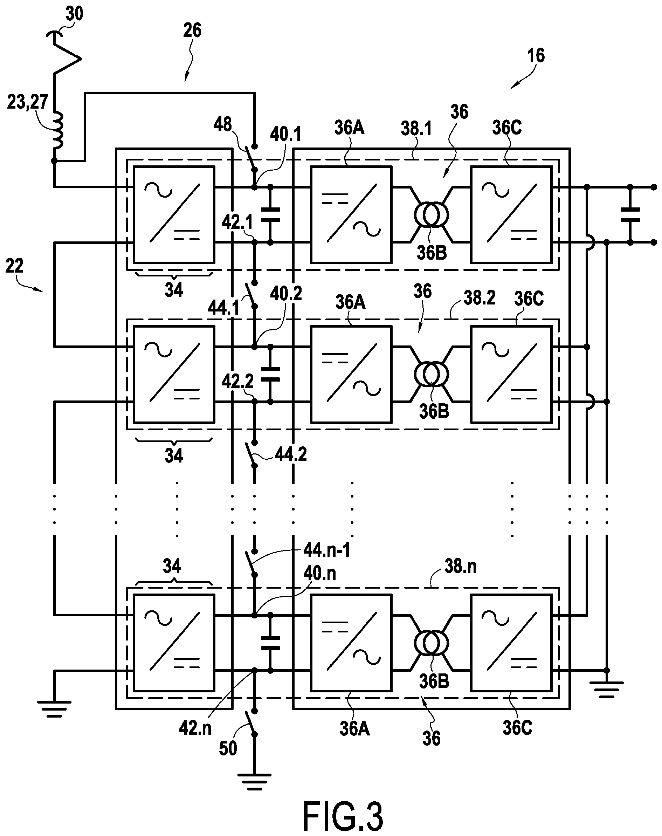

Dans tous les modes de réalisation de l'invention qui sont évoqués ciavant et ci-après, on peut prévoir indifféremment deux possibilités concernant le contact embarqué des deux circuits de connexion **22, 26.** Dans les exemples illustrés aux **Figs. 1** et **2****,** et aux **Figs. 6** à **10****,** le premier circuit de connexion **22** comporte un premier contact embarqué **24** dédié pour la connexion à la première source fixe de tension électrique de réseau, et le second circuit de connexion **26** comporte un second contact embarqué **28** dédié pour la connexion à la seconde source de tension électrique de réseau. Le second contact embarqué **28** est alors distinct du premier contact embarqué **24.** Au contraire, on peut prévoir, comme dans les exemples de réalisation des **Figs. 3** à **5****,** que le premier circuit de connexion **22** et le second circuit de connexion **26** comportent un contact embarqué commun **30** pour la connexion à l'une ou l'autre de la première ou de la seconde source de tension. Les contacts embarqués, qu'ils soient distincts ou communs, sont de préférence des éléments physiques dont la forme est adaptée à un maintien du contact électrique avec le contact linéique fixe **14** lors du déplacement de l'engin mobile **10.** Dans les systèmes ferroviaires, un tel contact embarqué se présente souvent sous la forme d'un archet. Dans les systèmes de trolleybus, un tel contact embarqué se présente souvent sous la forme d'un frotteur en bronze ou en carbone, le frotteur étant parfois remplacé par une roulette. Le contact embarqué est généralement disposé à l'extrémité d'un mécanisme de support articulé. Ce mécanisme de support articulé, qui est solidaire de l'engin mobile **10** mais qui est articulé sur un élément structurel de celui-ci, prend par exemple la forme d'un pantographe **32** tel que sommairement représenté sur les figures, notamment dans les applications ferroviaires, ou la forme de perches articulées, notamment dans les applications de type trolleybus. Le mécanisme de support articulé est généralement muni de ressorts qui permettent de plaquer en permanence le contact embarqué **24, 28, 30** en appui mécanique contre le contact linéique fixe **14,** de manière à assurer le contact électrique.

Dans tous les modes de réalisation illustrés, on pourra prévoir, comme dans la **Fig. 1****,** que le premier et le second circuit de connexion électrique **22**, **26** soient équipés chacun d'une portion retour, par exemple sous la forme d'une connexion à un potentiel électrique neutre ou à un autre potentiel électrique, par exemple négatif. Cependant, dans la plupart des cas, on pourra prévoir au contraire, comme illustré à la **Fig. 7**, que le premier et le second circuit de connexion électrique **22, 26** soient équipés d'une portion retour commune, par exemple sous la forme d'une connexion commune à un potentiel électrique neutre. Dans certains cas, la portion retour du circuit de connexion se connecte, de manière similaire, à un contact linéique fixe dédié au retour du courant. On note qu'il peut y avoir différents contacts linéiques dédiés au retour du courant, par exemple l'un pour la configuration pour tension alternative et l'autre pour la configuration pour tension continue. Par exemple, on peut avoir pour l'un un retour par le rail et pour l'autre un retour par une ligne de contact aérienne. On peut cependant prévoir un contact linéique commun, pour le retour du courant, pour la configuration pour tension alternative et pour la configuration pour tension continue.

Selon l'invention, le système embarqué de conversion de puissance **16** comporte au moins :
- un étage amont de conversion de puissance alternative-continue **34,** qui est relié électriquement, par un côté amont **341,** au premier circuit de connexion **22** ; cet étage amont est donc un convertisseur de puissance électrique de type redresseur ;
- un étage aval de conversion de puissance continue-continue isolé **36** qui est relié électriquement, par un côté amont **361,** au côté aval **342** de l'étage amont de conversion de puissance alternative - continue **34** ; cet étage aval de conversion de puissance continue - continue **36,** isolé, présente un côté aval **362** qui forme le côté aval du système embarqué de conversion de puissance **16** capable de délivrer une tension continue au système de traction **18.**

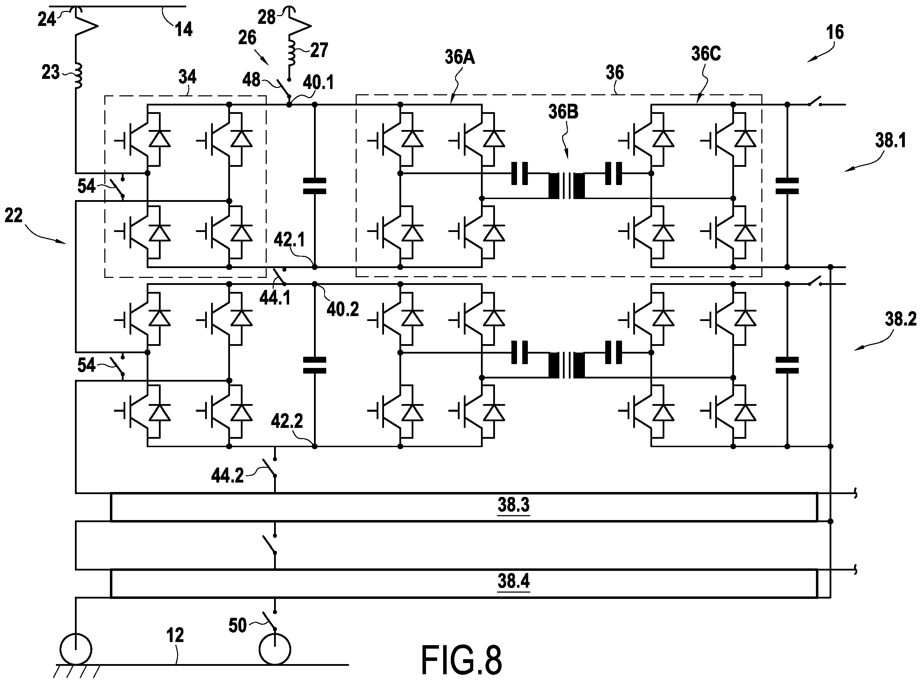

Chaque étage amont **34** ou aval **36** peut être réalisé de différentes manières, généralement sous la forme d'un montage de composants d'électronique de puissance, notamment à base d'interrupteurs électroniques de type diode, MOSFET, thyristor et/ou IGBT, dont la commutation peut être commandée par une unité électronique de commande. Divers exemples de réalisation de ces étages amont ou aval seront décrits plus en détail en relation avec les **Figs. 8** à **10****.**

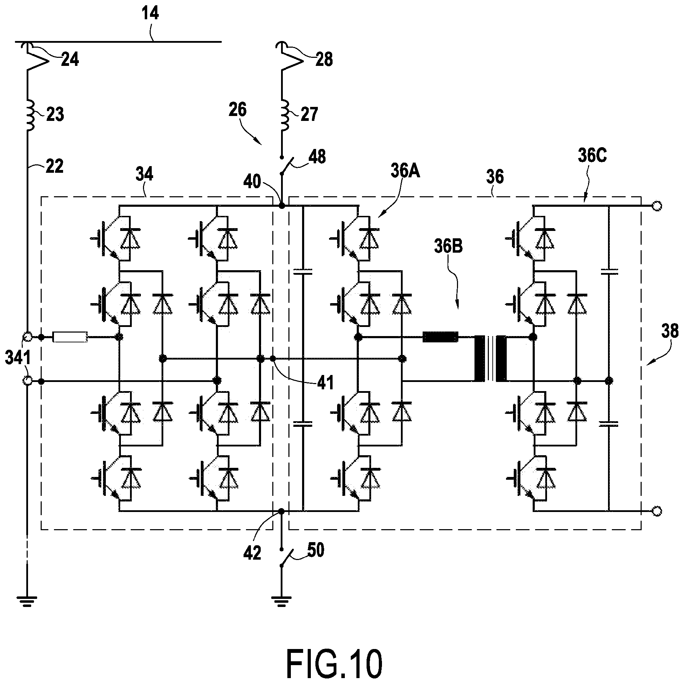

On a illustré à la **Fig. 10** un cas particulier d'un système embarqué de conversion puissance **16** qui comporte une seule tranche de conversion. Cette tranche unique de conversion de puissance comporte un étage amont de conversion de puissance alternative-continue **34** relié électriquement, par son côté aval, à un côté amont d'un étage aval de conversion de puissance continue-continue, isolé, **36.**

Cependant, dans la plupart des applications, notamment celles correspondant aux plus hautes valeurs nominales de la tension électrique de réseau, on prévoira que le système embarqué de conversion de puissance comporte plusieurs tranches de conversion **38.1, 38.2,** ..., **38.i,** ..., **38.n.** Ces n tranches de conversion, par exemple entre 2 et 20 tranches de conversion, sont agencées dans le système embarqué de conversion **16** de telle sorte que chacune n'est soumise qu'à une partie, une fraction, de la tension électrique fournie par la première source de tension de réseau alternative. Chaque tranche de conversion fournit de la puissance électrique continue au système de traction **18,** ou à un autre système embarqué consommateur d'énergie électrique (décrit précédemment comme « auxiliaire »). A cet effet, dans les exemples illustrés dans lesquels le système embarqué de conversion **16** comporte plusieurs tranches de conversion ayant chacune un étage amont de conversion de puissance alternative-continue **34,** les étages amont de conversion de puissance alternative-continue **34** sont connectés électriquement en série, par leur côté amont, dans le premier circuit de connexion **22.**

Ainsi, chaque tranche de conversion **38.1, 38.2,** ..., **38.n** comporte un étage amont de conversion de puissance alternative-continue **34** relié électriquement, par un côté amont **341,** au premier circuit de connexion **22,** et le système embarqué de conversion **16** comporte, pour chaque tranche de conversion **38.1, 38.2,** ..., **38.n,** entre l'étage amont de conversion de puissance alternative-continue **34** et le système de traction **18** ou autre système embarqué consommateur d'énergie électrique, un étage aval de conversion de puissance continue-continue isolé **36.** Comme pour le cas particulier d'une unique tranche de conversion, pour chaque tranche de conversion **38.1, 38.2,** ..., **38.n,** l'étage amont de conversion de puissance alternative-continue **34** et l'étage aval de conversion de puissance continue-continue isolé **36** sont reliés électriquement l'un à l'autre, respectivement par un côté aval **342** et par un côté amont **361,** au niveau d'une connexion intermédiaire. Comme on le verra sur les figures, cette liaison électrique se fait au niveau de pôles intermédiaires sous tension continue **40, 42** qui forment la connexion intermédiaire entre l'étage amont **34** et l'étage aval **36** de conversion puissance d'une même tranche de conversion.

Pour chaque tranche de conversion de puissance, le côté amont **341** de l'étage amont de conversion de puissance est constitué généralement par deux bornes de connexion amont **3411, 3412.** Parfois qualifiées de bornes d'entrée, ces bornes amont **3411, 3412,** sont reliées électriquement au premier circuit de connexion **22**. Dans les exemples illustrés dans lesquels le système embarqué de conversion comporte plusieurs tranches de conversion, l'étage amont de conversion de puissance alternative-continue d'une première tranche de conversion **38.1** comporte ainsi une première borne de connexion amont **3411** qui est reliée électriquement à une portion amont du premier circuit de connexion **22**, du côté du contact embarqué **24**, **30.** Une deuxième borne de connexion amont **3412** de ce même étage amont de la première tranche de conversion **38.1** est reliée électriquement à une première borne **3411** de l'étage amont d'une deuxième tranche de conversion **38.2.** La deuxième borne de connexion amont **3412** de ce même étage amont de la deuxième tranche de conversion **38.2** est reliée électriquement à une première borne **3411** de l'étage amont d'une troisième tranche de conversion **38.3,** et ainsi de suite. Une deuxième borne de connexion amont **3412** de l'étage amont de la nième et dernière tranche de conversion **38.n** est reliée électriquement à la portion retour **17** du premier circuit de connexion **22.**

Pour chaque tranche de conversion de puissance, le côté aval **342** de l'étage amont de conversion de puissance est constitué généralement par deux bornes aval de connexion **3421, 3422** de l'étage amont, parfois trois ou plus. Parfois qualifiées de bornes de sortie, ces bornes aval **3421, 3422** sont reliées électriquement chacune respectivement à une borne amont **3611, 3612** (ou bornes d'entrée) correspondante de l'étage aval de conversion de puissance **36** de la tanche de conversion considérée. Pour chaque tranche de conversion, on a généralement aux moins deux bornes aval **3421, 3422** de l'étage amont **34** qui sont connectées chacune respectivement à une des bornes amont **3611, 3612** de l'étage aval **36.**

Une borne aval **3421, 3422** de l'étage amont **34** et la borne amont **3611, 3612** de l'étage aval **36** qui lui est reliée électriquement forment un pôle intermédiaire entre l'étage amont **34** et l'étage aval **36.** Pour chaque tranche de conversion comprenant un étage amont de conversion de puissance alternative-continue **34** et un étage aval de conversion de puissance continue-continue **36,** on a généralement une connexion intermédiaire formée de deux pôles intermédiaires **40, 40.1, 40.2**,..., **40.i,** ..., **40.n, 42, 42.1,** ..., **42.i,** ..., **42.n** entre lesquels est établie une tension continue. Parfois, le mode de réalisation des étages amont **34** et aval **36** de conversion de puissance fait qu'il y a plus de deux pôles intermédiaires pour la connexion intermédiaire, comme par exemple dans le mode de réalisation de la **Fig. 10** qui présente trois pôles intermédiaires **40, 41, 42.**

En d'autres termes chaque étage amont de conversion de puissance alternative-continue **34** et chaque étage aval de conversion de puissance continue-continue isolé **36** comporte chacun un côté amont **341, 361,** avec des bornes amont **3411, 3412, 3611, 3612,** et un côté aval **342, 362,** avec des bornes aval **3421, 3422, 3621, 3622,** et, dans une tranche de conversion de puissance, les bornes aval **3421, 3422** de l'étage amont de conversion de puissance alternative-continue sont reliées chacune respectivement à une des bornes amont **3611, 3612** de l'étage aval **36** de conversion de puissance continue-continue isolé de la tranche de conversion correspondante, au niveau d'un pôle intermédiaire électriquement commun à la borne amont et à la borne aval considérée.

Dans un système embarqué de conversion de puissance **16** selon l'invention, le second circuit de connexion **26** permet, dans la configuration pour tension continue, de relier :
- une, plusieurs ou toutes les tranches de conversion du système embarqué de conversion, entre l'étage amont de conversion de puissance alternative-continue **34** et l'étage aval de conversion de puissance continue-continue isolé **36,** donc au niveau des pôles intermédiaires **40, 40.1, 40.2,..., 40.n, 42, 42.1,** ..., **42.n** sous tension continue situés entre les étages amont **34** et aval **36,**
- à la seconde source fixe de tension électrique fournissant une moyenne tension continue.

Comme on le voit dans les figures, chaque tranche de conversion de puissance se trouve interposée, par ses pôles intermédiaires **40, 40.1, 40.2,..., 40.n, 42, 42.1,** ..., **42.n,** dans le second circuit de connexion électrique, entre le contact embarqué **28, 30** destiné à venir en contact avec le second contact linéique fixe et la portion retour du second circuit électrique de connexion **26.** Plus précisément, pour chaque tranche de conversion de puissance, un premier pôle intermédiaire **40, 40.1, 40.2,..., 40.n,** est relié, directement ou indirectement, à une portion amont du second circuit de connexion **26,** du côté du contact embarqué **28, 30** de ce second circuit, et un second pôle intermédiaire **42, 42.1,..., 42.n** est relié, directement ou indirectement à une portion aval du second circuit de connexion **26,** du côté de la portion de retour de ce second circuit **26.**

Dans certains des exemples illustrés comportant plusieurs tranches de conversion ayant chacune un étage aval de conversion de puissance continue-continue isolé **36,** ces étages aval de conversion de puissance continue-continue isolés **36** sont connectés électriquement en série, par leur côté amont **361,** dans le second circuit de connexion **26.** On se réfère ici notamment aux modes de réalisation des **Figs. 1** à **4** et **6** à **10.** Dans ces exemples illustrés, l'étage aval de conversion de puissance alternative-continue **36** d'une première tranche de conversion **38.1** comporte ainsi une première borne de connexion amont **3611,** et donc le premier pôle intermédiaire correspondant **40.1,** qui est reliée électriquement à une portion amont du second circuit de connexion **26,** du côté du contact embarqué **28, 30.** Une deuxième borne de connexion amont **3612** de ce même étage aval de la première tranche de conversion **38.1,** et donc le second pôle intermédiaire correspondant **42.1,** est reliée électriquement à une première borne **3611** de l'étage aval d'une deuxième tranche de conversion **38.2** et donc au pôle intermédiaire correspondant **40.2,** par une première portion de liaison du second circuit de connexion électrique **26.** La deuxième borne de connexion amont **3612** de ce même étage aval de la deuxième tranche de conversion **38.2,** et donc le deuxième pôle intermédiaire correspondant **42.2,** est reliée électriquement à une première borne amont **3411** de l'étage aval d'une troisième tranche de conversion **38.3,** par une deuxième portion de liaison du second circuit de connexion **26,** et ainsi de suite. Une deuxième borne de connexion amont **3612** de l'étage aval de la nième et dernière tranche de conversion **38.n,** et donc le deuxième pôle intermédiaire **42.n** de cette tranche de conversion, est reliée électriquement à la portion retour **17** du second circuit de connexion **26.**

En d'autres termes, le second circuit de connexion électrique **26** comporte successivement dans cet ordre :
- le second contact embarqué **28, 30** ;
- une portion amont de circuit qui relie le second contact embarqué **28, 30** à un premier pôle intermédiaire **40.1** d'une première tranche de conversion de puissance **38.1** ;
- le côté amont de l'étage aval **36** de la première tranche de conversion **38.1** ;
- une première portion de liaison reliant le second pôle intermédiaire **42.1** de la première tranche de conversion **38.1** à un premier pôle intermédiaire **40.2** d'une deuxième tranche de conversion **38.2** ;
- ainsi de suite pour les n tranches de conversion, reliées entre elles par une (i)ème portion de liaison reliant le second pôle intermédiaire **42.(i)** de la (i)ème tranche de conversion à un premier pôle intermédiaire **40**.**(i+1**) d'une **(i**+**1**)ème tranche de conversion ;
- le deuxième pôle intermédiaire **42.n** de la nième et dernière tranche de conversion **38.n** étant relié électriquement à la portion retour **17** du second circuit de connexion **26.**

Le second circuit de connexion électrique **26** permet au système **16** d'être alimenté sous tension continue pour permettre le déplacement de l'engin mobile **10** et éventuellement permettre l'alimentation de circuits auxiliaires, et distribue cette puissance entre une ou plusieurs tranches de conversion de puissance du système **16.** Le second circuit de connexion électrique **26** comprend généralement un filtre électrique, par exemple une première inductance de filtrage amont **27,** qui est de préférence inséré dans la portion amont de circuit **26** qui relie le second contact embarqué **28, 30** au premier pôle intermédiaire **40.1** de la première tranche de conversion **38.1.**

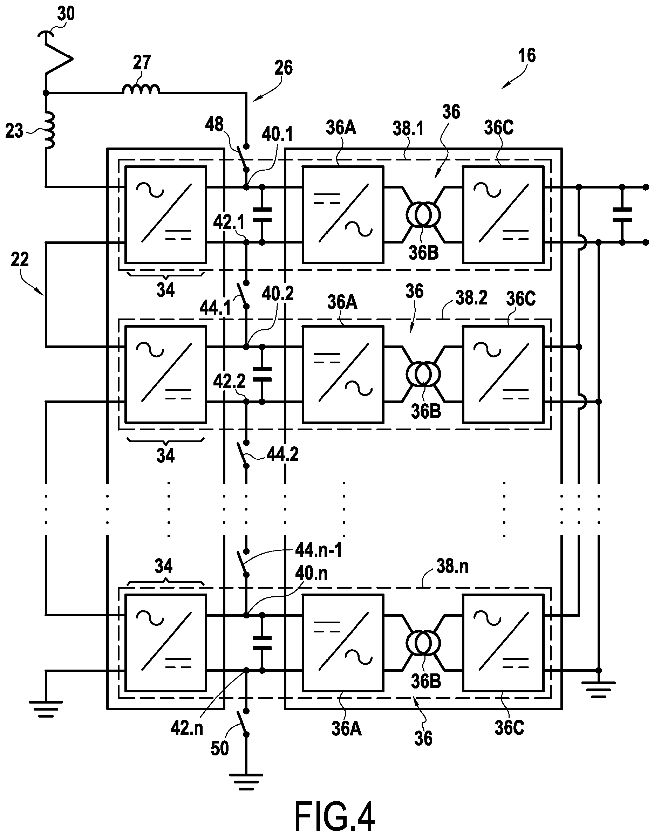

Dans les cas où le premier et le second circuit de connexion électrique **22, 26** comportent un contact embarqué commun **30,** comme illustré aux figures **3** et **4****,** on peut prévoir que le premier circuit de connexion **22** et le second circuit de connexion **26** comportent une inductance de filtrage commune **23, 27** ou un filtre électrique commun. Au contraire, on peut prévoir que le premier circuit de connexion et le second circuit de connexion comportent chacun au moins une inductance de filtrage dédiée distincte **23, 27,** comme illustré à la **Fig. 4** ou un filtre électrique dédié distinct. La présence d'une inductance de filtrage commune aux deux circuits de connexion **22, 26** n'empêche pas de prévoir la présence, dans le premier et/ou le second circuit de connexion **22, 26,** d'une inductance de filtrage dédiée supplémentaire.

On notera que, dans certains cas, le second circuit de connexion **26** comporte des moyens d'interruption amont **48** du courant électrique entre d'une part le contact embarqué **28, 30** et d'autre part l'ensemble des tranches de conversion du système embarqué de conversion qui sont reliées au second circuit de connexion **26.** Par exemple, on peut prévoir un interrupteur amont **48** dans la portion amont du second circuit **26** qui relie le second contact embarqué **28, 30** au premier pôle intermédiaire **40.1** de la première tranche de conversion de puissance **38.1.** Un tel interrupteur amont **48** est par exemple interposé dans le second circuit entre l'inductance de filtrage **27** et le premier pôle intermédiaire **40.1** de la première tranche de conversion de puissance **38.1.** Des tels moyens d'interruption amont du second circuit électrique de connexion seront surtout prévus dans le cas où le premier et le second circuit de puissance **22, 26** ont un contact embarqué commun **30,** puisqu'il est alors nécessaire d'isoler électriquement les pôles intermédiaires par rapport au contact embarqué lorsque, dans la première configuration pour tension alternative, celui-ci est relié électriquement à la première source de tension alternative. Ainsi, un tel interrupteur amont **48** est ouvert dans la première configuration pour tension alternative et fermé dans la seconde configuration pour la tension continue. Comme dans les modes de réalisation illustrés aux **Figs. 2** à **10****,** on peut prévoir aussi de tels moyens d'interruption amont **48** du courant électrique entre d'une part le contact embarqué **28, 30** et d'autre part l'ensemble des tranches de conversion, dans les modes de réalisation comportant des contacteurs dédiés distincts **24, 28** pour le premier et le deuxième circuit de connexion **22, 26**.

On note encore que, de manière similaire, on prévoira de préférence des moyens d'interruption aval du courant électrique, par exemple sous la forme d'un interrupteur aval **50,** entre d'une part l'ensemble des tranches de conversion du système embarqué de conversion qui sont reliées au second circuit de connexion et d'autre part la portion de retour du second circuit de connexion **26.** Un tel interrupteur aval **50** est ouvert dans la première configuration pour tension alternative et fermé dans la seconde configuration pour la tension continue.

Dans les exemples illustrés, on a prévu la présence, entre les pôles intermédiaires d'une tranche de conversion **38, 38.1,..., 38.n,** d'un filtre électrique **46,** notamment d'un filtre capacitif, par exemple une capacité. Le filtre électrique **46** est donc inséré dans le second circuit de connexion **26,** en parallèle du côté amont **361** de l'étage aval **36** de la tranche de conversion considérée. On note en réalité que le filtre **36** pourrait être incorporé dans le côté amont **361** de l'étage aval **36,** ou dans le côté aval **342** de l'étage amont **34** de la tranche de conversion considérée. Ainsi, dans les exemples illustrés, pour chaque tranche de conversion, une capacité **46** est agencée électriquement en parallèle de deux bornes amont **3611, 3612** du côté amont **361** de l'étage aval de conversion de puissance continue-continue isolé **36.**

De préférence, pour deux tranches de conversion pour lesquelles les étages aval de conversion de puissance continue-continue isolés **36** sont connectés électriquement consécutivement en série dans le second circuit de connexion **26,** un interrupteur électrique **44.1, 44.2,..., 44.(n-1**), appelé par la suite interrupteur secondaire de configuration, est interposé dans le second circuit de connexion **26** entre les deux tranches de conversion considérées, donc interposé dans la portion de liaison correspondante du second circuit de connexion **26.** Ces interrupteurs secondaires de configuration **44.1, 44.2,..., 44.(n-1**) sont fermés lorsque le système de conversion de puissance est dans la seconde configuration pour la tension continue, ceci afin que la tension électrique entre le second contact embarqué **28, 30** et la portion retour **17** soit distribuée entre tous les étages aval de conversion de puissance continue-continue **36** de chacune des tranches de conversion. Au contraire, ces interrupteurs secondaires de configuration **44.1, 44.2,..., 44.(n-1**) sont ouverts lorsque le système de conversion de puissance **16** est dans la première configuration pour la tension alternative. Ceci permet d'assurer, dans la première configuration, une isolation électrique entre les différentes tranches de conversion, au niveau des pôles intermédiaires.

Dans les exemples des **Figs. 2** à **4** et **6** à **9,** toutes les tranches de conversion du système de conversion sont connectées électriquement en série, par le côté amont **361** de leur étage aval de conversion de puissance continue-continue **36,** dans le même second circuit de connexion électrique **26,** entre le second contacteur embarqué **28, 30** et la portion de retour de ce second circuit de connexion électrique **26.**

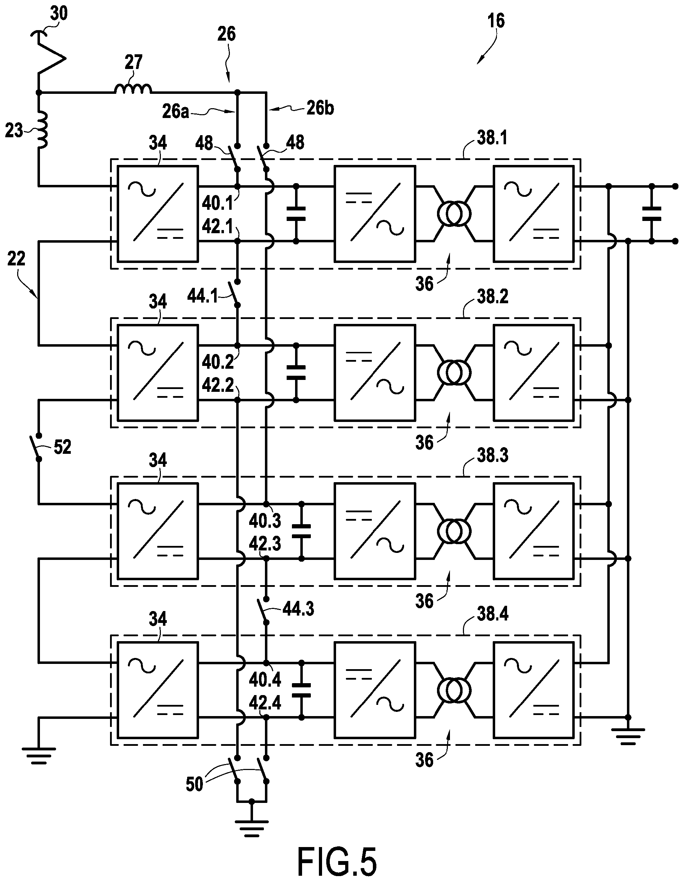

A la **Fig. 5****,** on a illustré un mode de réalisation dans lequel le second circuit de connexion **26** est divisé en deux branches **26a, 26b** qui sont électriquement en parallèle l'une de l'autre. Cela permet de répartir, dans la seconde configuration du système embarqué de conversion de puissance **16,** pour le fonctionnement sous tension continue, les tranches de conversion de puissance en deux séries. Pour chaque série de tranches de conversion, les étages aval de conversion de puissance continue-continue isolés **36** sont connectés électriquement en série, par leur côté amont, dans la branche correspondante **26a, 26b** du second circuit de connexion **26.** Ainsi, dans l'exemple de la **Fig. 5****,** une première et une deuxième tranche de conversion **38.1** et **38.2,** formant une première série, sont agencées en série dans la première branche **26a** du second circuit de connexion. Le premier pôle intermédiaire **40.1** de la première tranche de conversion **38.1** est relié électriquement à la portion amont du second circuit de connexion électrique **26.** Le deuxième pôle intermédiaire **42.2** de la deuxième tranche de conversion **38.2** est relié électriquement à la portion de retour de la première branche **26a.** Le deuxième pôle intermédiaire **42.1** de la première tranche de conversion **38.1** est relié au premier pôle intermédiaire de la deuxième tranche de conversion **38.2** par une première portion de liaison dans laquelle est inséré un interrupteur secondaire de configuration **44.1.** Une troisième et une quatrième tranche de conversion **38.3** et **38.4,** formant une seconde série, sont agencées en série dans la seconde branche **26b** du second de circuit de connexion **26.** Le premier pôle intermédiaire **40.3** de la troisième tranche de conversion **38.3** est relié électriquement à la portion amont du second circuit de connexion électrique **26.** Le deuxième pôle intermédiaire **42.4** de la quatrième tranche de conversion **38.4** est relié électriquement à la portion de retour de la seconde branche **26b.** Le deuxième pôle intermédiaire **42.3** de la troisième tranche de conversion **38.3** est relié au premier pôle intermédiaire **40.4** de la quatrième tranche de conversion **38.4** par une portion de liaison dans laquelle est inséré un interrupteur secondaire de configuration **44.3.**

On remarque que, dans l'exemple de la **Fig. 5****,** chaque branche **26a, 26b** comporte son propre interrupteur amont **48,** entre le second contact embarqué **28, 30** et l'ensemble des tranches de conversion du système embarqué de conversion qui sont reliées à la branche considérée **26a, 26b** du second circuit de connexion **26.** De même, chaque branche **26a, 26b** comporte son propre interrupteur aval **50,** entre d'une part l'ensemble des tranches de conversion du système embarqué de conversion qui sont reliées à la branche considérée du second circuit de connexion électrique **26,** et d'autre part la portion de retour du second circuit de connexion **26.**

De manière plus générale, les tranches de conversion peuvent ainsi être réparties en plusieurs séries, et le second circuit de connexion comporte alors autant de branches, électriquement en parallèle l'une de l'autre, que le nombre de séries de tranches de conversion.

Comme on peut le voir sur la **Fig. 5****,** pour les tranches de conversion appartenant à une même série, au sens que les étages aval de conversion de puissance continue-continue isolés **36** des tranches considérées sont connectés électriquement en série, par leur côté amont **361,** dans une même branche du second circuit de connexion **26,** les étages amont de conversion de puissance alternative-continue **34** des tranches de cette série sont connectés consécutivement électriquement en série dans le premier circuit de connexion électrique **22.** Par ailleurs, pour deux tranches de conversion appartenant à deux séries distinctes, mais pour lesquelles les étages amont de conversion de puissance alternative-continue **34** sont connectés consécutivement électriquement en série dans le premier circuit de connexion **22,** un interrupteur primaire de configuration **52** est interposé dans le premier circuit de connexion **22** entre les deux tranches. Cet interrupteur primaire de configuration **52** est fermé dans la première configuration du système **16,** pour la tension alternative, mais ouvert dans la seconde configuration, pour la tension continue. Cela permet, dans la seconde configuration, d'isoler électriquement les deux séries de tranches de conversion, pour leur étage amont **34.** Sur la **Fig. 5****,** l'interrupteur primaire de configuration **52** est donc agencé entre la deuxième borne de connexion amont **3412** de l'étage amont **34** de la deuxième tranche de conversion **38.2** et la première borne de connexion amont **3411** de l'étage amont **34** de la troisième tranche de conversion **38.3.** Dans l'exemple de la **Fig. 5****,** on a illustré le cas d'un système comportant deux séries de tranches de conversion distinctes, pour chacune desquelles les étages aval de conversion de puissance continue-continue isolés **36** des tranches considérées sont connectés électriquement en série. Bien entendu l'enseignement peut être élargi à un nombre quelconque N de séries, le second circuit de connexion comportant alors autant de branches, électriquement en parallèle l'une de l'autre, que le nombre de séries de tranches de conversion. Dans ce cas, on trouve un interrupteur primaire de configuration **52** interposé dans le premier circuit de connexion **22** entre deux tranches de deux séries distinctes, soit généralement au total N-1 interrupteurs primaires de configuration pour le système.

De manière connue, dans les modes de réalisation comportant plusieurs tranches de conversion, ayant chacune un étage amont de conversion de puissance alternative-continue **34** et un étage aval de conversion de puissance continue-continue isolé **36,** on peut prévoir que plusieurs étages aval de conversion de puissance continue-continue isolés **36,** voire tous les étages aval de conversion de puissance continue-continue isolés **36,** soient connectés entre eux électriquement en parallèle par leur côté aval **362.** De la sorte, les courants électriques convertis par les tranches de conversion sont ajoutés les uns aux autres, pour fournir au système de traction **18** de fortes intensités de courant.

Cependant, dans les modes de réalisation comportant plusieurs tranches de conversion, ayant chacune un étage amont de conversion de puissance alternative-continue **34** et un étage aval de conversion de puissance continue-continue isolé **34,** on peut prévoir :
- une premier groupe de tranches de conversion pour lequel les étages aval de conversion de puissance continue-continue isolés **36** sont connectés entre eux électriquement en parallèle par leur côté aval **362,** pour alimenter un premier système consommateur, par exemple un premier système de traction électrique **18,**
- au moins un deuxième groupe pour lequel les étages aval de conversion de puissance continue-continue isolés **36** sont connectés entre eux électriquement en parallèle par leur côté aval **362,** mais indépendamment de ceux du premier groupe, pour alimenter un deuxième système consommateur, par exemple un deuxième système de traction électrique ou un système électrique auxiliaire.

On trouve une telle configuration à la **Fig. 7** par exemple, où la première et la deuxième tranche de conversion font ainsi partie d'un même premier groupe **G1,** alimentant un système de traction électrique **18,** et où une (n-1)ème et (n)ème tranche de conversion font partie d'un même deuxième groupe **G2,** alimentant un système auxiliaire. On note qu'on peut prévoir plus de deux groupes. Eventuellement, on peut prévoir que chaque tranche de conversion constitue à elle seule un groupe. Dans ce cas, chaque étage aval de conversion de puissance continue-continue isolé **36** est indépendant des autres étages aval de conversion de puissance continue-continue isolés **36,** pour alimenter chacun de manière indépendante un système consommateur, par exemple un système de traction électrique **18** ou un système électrique auxiliaire **56.**

On note que les tranches de conversion appartenant à un même groupe, pour lequel les étages aval de conversion de puissance continue-continue isolés **36** sont connectés entre eux électriquement en parallèle par leur côté aval **362,** peuvent appartenir à une même série, pour laquelle les étages aval de conversion de puissance continue-continue isolés **36** sont connectés électriquement en série, par leur côté amont **361,** dans une même branche correspondante du second circuit de connexion **26.** Cependant, des tranches de conversion appartenant à un même groupe peuvent appartenir à une série différente de tranches de conversion. Inversement, des tranches de conversion appartenant à un groupe différent peuvent appartenir à une même série de tranches de conversion.

De manière générique, on peut avantageusement prévoir que, dans une tranche de conversion de puissance, l'étage aval de conversion de puissance continue-continue isolé **36** soit réalisé sous la forme de l'association :
- en amont, d'un convertisseur primaire **36A** continu-alternatif ayant un côté amont continu, formant le côté amont **361** de l'étage aval de conversion de puissance continue-continue isolé **36,** et un côté aval alternatif ;
- d'un transformateur **36B** ayant un bobinage primaire, connecté au côté aval du convertisseur primaire **36A,** et un bobinage secondaire,
- en aval, un convertisseur secondaire **36C** ayant un côté amont alternatif connecté au bobinage secondaire du transformateur **36B,** et un côté aval continu qui forme le côté aval **362** de l'étage aval de conversion de puissance continue-continue isolé **36.**

Chaque bobinage primaire ou secondaire peut comprendre un unique enroulement ou au contraire plusieurs enroulements. Le transformateur peut être monophasé ou polyphasé.

La présence du transformateur **36B,** de type statique avec enroulements primaire(s) et secondaire(s) autour d'un circuit magnétique, entre le convertisseur primaire **36A** et le convertisseur secondaire **36C,** assure une isolation galvanique entre ces deux convertisseurs et confère donc à l'étage aval de conversion de puissance **36** son caractère isolé.

Dans les exemples des **Figs. 1** à **5****,** **8** et **9****,** comportant plusieurs tranches de conversion de puissance, chaque étage aval de conversion de puissance continue-continue isolé **36** est indépendant des étages aval de conversion de puissance continue-continue isolé **36** des autres tranches de conversion de puissance, au sens que chaque étage aval de conversion de puissance continue-continue isolé **36** comporte son propre convertisseur primaire **36A,** son propre transformateur **36B** et son propre convertisseur secondaire **36C.**

Au contraire, dans les modes de réalisation des **Figs. 6** et **7****,** le système embarqué de conversion de puissance **16** comporte plusieurs tranches de conversion ayant chacune un étage aval de conversion de puissance continue-continue isolé, et il comporte au moins deux tranches de conversion de puissance qui ont chacune un étage aval de conversion de puissance continue-continue isolé qui partage au moins une partie de ses composants avec un ou plusieurs autres étage(s) aval de conversion de puissance continue-continue isolé(s) **36.**

Dans l'exemple de la **Fig. 6****,** le système **16** présente un premier lot **L1** de tranches de conversion de puissance, ici au nombre de deux, qui ont chacune un étage aval de conversion de puissance continue-continue isolé **36** qui partagent le convertisseur secondaire et l'enroulement secondaire, tout en ayant chacun leur propre convertisseur primaire. Ici, ce premier lot L1 alimente un premier système de traction électrique **18.** Par ailleurs, un tel système **16** peut, comme illustré, présenter un deuxième lot **L2,** ici constitué de deux autres tranches de conversion de puissance, qui ont elles aussi chacune un étage aval de conversion de puissance continue-continue isolé **36** qui partagent le convertisseur secondaire et l'enroulement secondaire, tout en ayant chacun leur propre convertisseur primaire.

L'exemple de réalisation de la **Fig. 6** possède une autre particularité qui est que deux lots de tranches de conversion de puissance partagent le même circuit magnétique de transformateur **36C.** De manière similaire, on observe que, dans le mode de réalisation de la **Fig. 7****,** toutes les tranches de conversion de puissance partagent le même circuit magnétique de transformateur **36C,** bien qu'ayant chacune leur propre convertisseur primaire **36A,** leur propres enroulements primaire et secondaire de transformateur **36B,** et leur propre convertisseur secondaire **36C.** Ainsi, de manière plus générale, on peut avoir un système de conversion de puissance **16** qui possède, pour un ensemble de tranches de conversion de puissance ayant chacune un étage aval de conversion de puissance continue-continue isolé **36,** un unique transformateur **36B,** défini par un unique circuit magnétique partagé.

Les **Figs. 8** à **10** illustrent plus particulièrement, avec un peu plus de détails et de manière non limitative, des structures possibles pour la réalisation :
- d'un étage amont de conversion de puissance alternative-continue **34;**
- d'un convertisseur primaire **36A** continu-alternatif de l'étage aval de conversion de puissance continue-continue **36** ;
- d'un convertisseur secondaire **36B** alternatif-continu de l'étage aval de conversion de puissance continue -continue **36**.

Dans tous ces exemples, ces éléments sont réalisés chacun sous la forme d'un montage de composants d'électronique de puissance. Dans la plupart des cas, chacun de ces trois éléments est réalisé sous la forme d'un montage, en pont complet ou en demi-pont, d'interrupteurs électroniques de puissance. Ces interrupteurs électroniques de puissance peuvent être des transistors par exemple de type IGBT ou MOSFET, des diodes, des thyristors ou des combinaisons série et/ou parallèle de ces composants.

Dans l'exemple de la **Fig. 8****,** on retrouve une structure présentée à la figure 6 du document Feng 2017 cité plus haut. Les trois éléments sont réalisés chacun, pour chaque étage de conversion, par un montage du type pont en H, ou pont complet, de quatre interrupteurs électroniques de puissance, par exemple des IGBT à haute tension. L'étage aval de conversion de puissance continue-continue **36** présente ainsi une structure de type « dual active bridge ». Une structure de type « dual active bridge » est décrite dans le document « A three-phase soft-switched high-power-density DC/DC converter for high-power applications", par Rik. W.A.A. De Doncker, D.M. Divan, and M.H. Kheraluwala, publié dans « IEEE Transactions on Industry Applications" (Volume 27, N°1, Jan/Fev 1991).

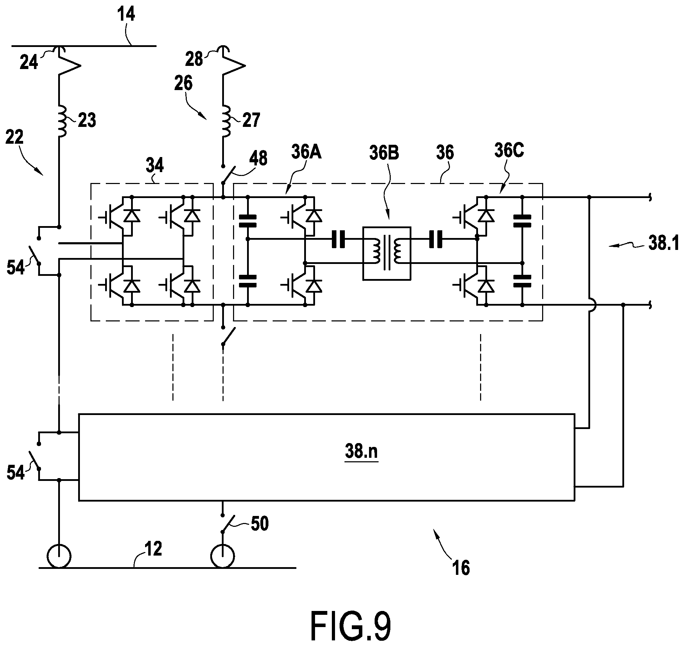

Dans l'exemple de la **Fig. 9****,** on retrouve une structure présentée à la figure 7 du document Farnesi 2016. Dans cette structure l'étage amont de conversion de puissance alternative-continue **34** est réalisé, pour chaque étage de conversion, par un montage du type pont en H de quatre interrupteurs électroniques de puissance, par exemple des IGBT à haute tension. En revanche, l'étage aval de conversion de puissance continue-continue **36** présente :
- un convertisseur primaire constitué d'un pont diviseur capacitif et un demi-pont comprenant deux interrupteurs électroniques de puissance, par exemple des IGBT ;
- un transformateur moyenne fréquence, ici en série avec des condensateurs, ici un en amont et un en aval, formant un circuit résonant;
- un convertisseur secondaire constitué d'un demi-pont comprenant deux interrupteurs électroniques de puissance, par exemple des IGBT, suivi d'un pont diviseur capacitif.

Dans les exemples des **Figs. 6** à **9****,** l'étage aval de conversion de puissance continue-continue **36** est de type résonant, notamment avec un transformateur en série avec des condensateurs en amont et en aval. Cependant, de manière générale, on peut aussi prévoir, en variante, que l'étage aval de conversion de puissance continue-continue **36** soit de type non-résonant.

Dans l'exemple de la **Fig. 10****,** on retrouve une structure présentée à la figure 19 du document Feng 2017. Dans cet exemple, le convertisseur n'est composé que d'une seule tranche. La connexion intermédiaire comporte trois pôles intermédiaires **40, 41** et **42** entre l'étage amont **34** de conversion de puissance alternative - continues et l'étage aval **36** de conversion de puissance continue - continue isolé. Cette configuration à trois pôles intermédiaires permet d'utiliser dans les convertisseurs **34** et **36A** des agencements de composants connus sous le nom *NPC* (Neutral Point Clamped). Ce type de circuit est connu pour permettre la réalisation de convertisseurs dans lesquels la tension (par exemple entre **40** et **42**) est supérieure à la tension que supporte un composant dans le convertisseur (par exemple les transistors dans **34).** Ici la structure est de type NPC à 2 niveaux. Des structures NPC à plus de niveaux sont connues. Dans l'exemple de la **Fig. 10****,** tous les étages de conversion utilisent une structure de type NPC. L'étage amont **34** de conversion de puissance alternative-continue **34** est de type pont complet NPC alors que les étages aval **36** de conversion de puissance du convertisseur de puissance continue - continue isolé, sont de type demi-pont NPC. D'autres combinaisons sont possibles. Dans cet exemple, l'alimentation via la source fixe de tension alternative est réalisée via les bornes **341** du convertisseur de puissance alternative continue. L'alimentation via la source fixe de tension continue est réalisée via les pôles intermédiaires **40** et **42.**

Comme relevé ci-dessus pour le mode de réalisation de la **Fig. 10****,** entre l'étage amont **34** et l'étage aval **36** de conversion puissance d'une même tranche de conversion, le système peut comporter plus de deux pôles intermédiaires, en l'occurrence trois pôles intermédiaires. Cependant, dans ce cas, seul deux des pôles intermédiaires sont utilisés pour l'insertion dans le second circuit de connexion électrique **26.**

On note par ailleurs que, comme illustré dans les **Figs. 8** et **9****,** on peut prévoir que les tranches de conversion soient pourvues d'un interrupteur de shunt **54** qui court-circuite le côté amont de l'étage amont de conversion de puissance alternative-continue **34.** En fonctionnement normal, un tel interrupteur de shunt **54** est ouvert et il n'est fermé que pour mettre hors-service une des tranches de conversion, par exemple en cas de défaut sur cette tranche. Dans ce cas, les autres tranches de conversion de puissance du système **16,** non shuntées, peuvent continuer de fonctionner. Cet interrupteur de shunt **54** est généralement considéré comme intégré dans l'étage amont de conversion de puissance alternative-continue **36** et n'est pas nécessairement représenté sur les autres figures.

L'invention n'est pas limitée aux exemples décrits et représentés car diverses modifications peuvent y être apportées sans sortir de son cadre tel que défini par les revendications.

## Revendications

1. Système embarqué de conversion de puissance électrique sous moyenne tension pour un engin mobile de transport **(10)** comportant un système de traction embarqué ayant au moins un moteur électrique de traction **(20),** du type dans lequel le système embarqué de conversion **(16)** :
- est embarqué dans l'engin mobile de transport **(10)** et délivre, en aval, une tension continue de traction au système de traction,
- est adapté pour être, lors d'un déplacement de l'engin mobile de transport, en contact mécanique et électrique soit, dans une configuration pour tension alternative, avec un contact linéique fixe **(14)** relié à une première source fixe de tension électrique de réseau, fournissant une moyenne tension alternative, soit, dans une configuration pour tension continue, avec un contact linéique fixe **(14)** relié à une seconde source fixe de tension électrique de réseau, fournissant une moyenne tension continue, le contact linéique fixe, la première source fixe et la seconde source fixe ne faisant pas partie du système embarqué de conversion,
- comporte, dans la configuration pour tension alternative, un premier circuit de connexion électrique **(22)** comprenant, en amont, au moins un contact embarqué **(24)** capable de venir en contact mécanique et électrique avec le contact linéique fixe **(14),**
- comporte, dans la configuration pour tension continue, un second circuit de connexion électrique **(26)** comprenant, en amont, au moins un contact embarqué **(28)** capable de venir en contact mécanique et électrique avec le contact linéique fixe **(14)** relié à la seconde source fixe de tension électrique de réseau,
- comporte plusieurs tranches de conversion **(38.i)** ayant chacune un étage amont **(34)** de conversion de puissance alternative-continue relié électriquement, par un côté amont, au premier circuit de connexion **(22),** les étages amont de conversion de puissance alternative-continue **(34)** sont connectés électriquement en série, par leur côté amont **(341),** dans le premier circuit de connexion **(22),** **caractérisé en ce que** le système embarqué de conversion **(16)** comporte, pour chaque tranche de conversion **(38.i),** entre l'étage amont **(34)** de conversion de puissance alternative-continue et le système de traction **(18),** un étage aval **(36)** de conversion de puissance continue-continue isolé, l'étage amont de conversion de puissance alternative-continue et l'étage aval de conversion de puissance continue-continue isolé de chaque tranche de conversion étant reliés l'un à l'autre, respectivement par un côté amont et par un côté aval, au niveau d'une connexion intermédiaire **(40.i, 42.i)** sous tension continue ;
**en ce que** le second circuit de connexion **(26)** permet, dans la configuration pour tension continue, de relier une, plusieurs ou toutes les tranches de conversion **(38.i)** du système embarqué de conversion **(16),** entre l'étage amont de conversion de puissance alternative-continue et l'étage aval de conversion de puissance continue-continue isolé, au niveau de la connexion intermédiaire **(40.i, 42.i)** sous tension continue, à la seconde source fixe de tension électrique fournissant une moyenne tension continue;
les étages aval de conversion de puissance continue-continue isolés **(36)** sont connectés électriquement en série, par leur côté amont **(361),** dans le second circuit de connexion **(26)**
avec, en alternative :
- soit toutes les tranches de conversion du système de conversion sont connectées électriquement en série, par le côté amont **(361)** de leur étage aval de conversion de puissance continue-continue **(36),** dans le même second circuit de connexion électrique **(26),** entre le second contacteur embarqué (**28**, **30**) et une portion de retour de ce second circuit de connexion électrique **(26)**
- soit les tranches de conversion **(38.i)** sont réparties en plusieurs séries, et le second circuit de connexion comporte autant de branches **(26a, 26b),** électriquement en parallèle l'une de l'autre, que le nombre de séries de tranches de conversion, et, pour chaque série de tranches de conversion, les étages aval de conversion de puissance continue-continue isolés **(36)** sont connectés électriquement en série, par leur côté amont **(361),** dans la branche correspondante **(26a, 26b)** du second circuit de connexion.

2. Système embarqué de conversion de puissance pour un engin mobile de transport selon la revendication **1**, **caractérisé en ce que** pour deux tranches de conversion **(38.i)** pour lesquelles les étages aval de conversion de puissance continue-continue isolés **(36)** sont connectés électriquement consécutivement en série dans le second circuit de connexion **(26),** un interrupteur électrique **(44.i)** est interposé dans le second circuit de connexion **(26)** entre deux tranches **(38.i).**

3. Système embarqué de conversion de puissance pour un engin mobile de transport selon l'une quelconque des revendications **1** ou **2, caractérisé en ce que**, pour les tranches de conversion **(38.i)** appartenant à une même série, les étages amont de conversion de puissance alternative-continue **(34)** sont connectés consécutivement électriquement en série dans le premier circuit de connexion **(22),** et **en ce que**, pour deux tranches de conversion **(38.i)** appartenant à deux séries distinctes mais pour lesquelles les étages amont de conversion de puissance alternative-continue **(34)** sont connectés consécutivement électriquement en série dans le premier circuit de connexion **(22),** un interrupteur électrique **(52)** est interposé dans le premier circuit de connexion **(22)** entre les deux tranches de conversion **(38.i).**

4. Système embarqué de conversion de puissance pour un engin mobile de transport selon l'une quelconque des revendications précédentes, **caractérisé en ce que** le système embarqué de conversion **(16)** comporte plusieurs tranches de conversion **(38.i)** ayant chacune un étage amont de conversion de puissance alternative-continue **(34)** et un étage aval de conversion de puissance continue-continue isolé **(36),** et **en ce que** plusieurs des, ou tous les étages aval de conversion de puissance continue-continue isolés **(36)** sont connectés entre eux électriquement en parallèle par leur côté aval **(362).**

5. Système embarqué de conversion de puissance pour un engin mobile de transport selon l'une quelconque des revendications précédentes, **caractérisé en ce que** le premier circuit de connexion **(22)** comporte un premier contact embarqué dédié **(24)** pour la connexion à la première source de tension, et le second circuit de connexion **(26)** comporte un second contact embarqué dédié **(28)** pour la connexion à la seconde source de tension, distinct du premier contact embarqué **(24),** ou **en ce que** le premier circuit de connexion **(22)** et le second circuit de connexion **(26)** comportent un contact embarqué commun (**24**, **28**) pour la connexion à l'une ou l'autre de la première ou de la seconde source de tension.

6. Système embarqué de conversion de puissance pour un engin mobile de transport selon la revendication **5**, **caractérisé en ce que** le second circuit de connexion **(26)** comporte des moyens d'interruption du courant électrique **(48)** entre le contact embarqué **(28)** et l'ensemble des tranches de conversion **(38.i)** du système embarqué de conversion **(16)** qui sont reliées au second circuit de connexion **(26).**

7. Système embarqué de conversion de puissance pour un engin mobile de transport selon l'une quelconque des revendications précédentes, **caractérisé en ce que** chaque étage amont de conversion de puissance alternative-continue **(34)** et chaque étage aval de conversion de puissance continue-continue isolé **(36)** comporte chacun un côté amont **(341, 361),** avec des bornes amont (**3411, 3412, 3611, 3612**) et un côté aval **(342, 362),** avec des bornes aval (**3421, 3422, 3621, 3622**), et **en ce que**, dans une tranche de conversion, les bornes aval (**3421, 3422**) de l'étage amont de conversion de puissance alternative-continue (34) sont reliées chacune respectivement à une des bornes amont (**3611, 3612**) de l'étage aval de conversion de puissance continue-continue isolé **(36)** de la tranche de conversion correspondante **(38.i).**

8. Système embarqué de conversion de puissance pour un engin mobile de transport selon la revendication **7**, **caractérisé en ce que**, pour chaque tranche de conversion **(38.i),** un filtre électrique **(46)** est agencé électriquement en parallèle de deux bornes amont (**3611, 3612**) du côté amont **(361)** de l'étage aval de conversion de puissance continue-continue isolé **(36).**

9. Système embarqué de conversion de puissance pour un engin mobile de transport selon l'une quelconque des revendications précédentes, **caractérisé en ce que**, pour chaque tranche de conversion **(38.i),** l'étage aval de conversion de puissance continue-continue isolé **(36)** est réalisé sous la forme de l'association :
- en amont, d'un convertisseur primaire continu-alternatif **(36A)** ayant un côté amont continu, formant le côté amont **(361)** de l'étage aval de conversion de puissance continue-continue isolé **(36),** et un côté aval alternatif;
- d'un transformateur **(36B)** ayant un bobinage primaire, connecté au côté aval du convertisseur primaire et un bobinage secondaire,
- en aval, un convertisseur secondaire **(36C)** ayant un côté amont alternatif connecté au bobinage secondaire du transformateur, et un côté aval continu qui forme le côté aval **(362)** de l'étage aval de conversion de puissance continue-continue isolé **(36).**

10. Système embarqué de conversion de puissance pour un engin mobile de transport selon l'une quelconque des revendications précédentes, **caractérisé en ce que** la connexion intermédiaire entre l'étage amont **34** et l'étage aval **36** de conversion puissance d'une même tranche de conversion est formée de pôles intermédiaires sous tension continue, et **en ce que** pour chaque tranche de conversion de puissance, un premier pôle intermédiaire **(40, 40.1, 40.2,..., 40.n)** est relié, directement ou indirectement, à une portion amont du second circuit de connexion **(26)** du côté du contact embarqué (**28**, **30**) de ce second circuit, connexion **(26)** et un second pôle intermédiaire **(42, 42.1,..., 42.n)** est relié, directement ou indirectement à une portion aval du second circuit de connexion **(26),** du côté de la portion de retour de ce second circuit **(26).**

11. Système embarqué de conversion de puissance pour un engin mobile de transport selon l'une quelconque des revendications précédentes, **caractérisé en ce que**, pour chaque tranche de conversion de puissance, le côté aval **(342)** de l'étage amont de conversion de puissance est constitué par deux, trois ou plus bornes aval de connexion **(3421, 3422)** de l'étage amont qui sont reliées électriquement chacune respectivement à une borne amont (**3611, 3612**) correspondante de l'étage aval de conversion de puissance (36) de la tanche de conversion considérée, de telle sorte qu'une borne aval (**3421, 3422**) de l'étage amont **(34)** et la borne amont **(3611, 3612)** de l'étage aval **(36)** qui lui est reliée électriquement forment un pôle intermédiaire entre l'étage amont **(34)** et l'étage aval **(36).**

12. Système embarqué de conversion de puissance pour un engin mobile de transport selon l'une quelconque des revendications précédentes, **caractérisé en ce que**, pour chaque tranche de conversion de puissance, on a une connexion intermédiaire formée de deux pôles intermédiaires **(40, 40.1, 40.2,..., 40.i,** ..., **40.n, 42, 42.1, ..., 42.i, ..., 42.n**), ou plus de deux pôles intermédiaires, entre lesquels est établie une tension continue.

13. Système embarqué de conversion de puissance pour un engin mobile de transport selon l'une quelconque des revendications précédentes, **caractérisé en ce que**, dans la configuration pour tension alternative, le système présente, au niveau des pôles intermédiaires, une isolation électrique entre les différentes tranches de conversion.

14. Système embarqué de conversion de puissance pour un engin mobile de transport selon l'une quelconque des revendications précédentes, **caractérisé en ce que**, pour deux tranches de conversion pour lesquelles les étages aval de conversion de puissance continue-continue isolés **(36)** sont connectés électriquement consécutivement en série dans le second circuit de connexion **(26),** un interrupteur (électrique **44.1, 44.2,..., 44.(n-1**)) est interposé dans le second circuit de connexion (26) entre les deux tranches de conversion considérées, ces interrupteurs (**44.1, 44.2,..., 44.(n-1**)) étant fermé lorsque le système de conversion de puissance est dans la seconde configuration pour la tension continue, mais ouverts lorsque le système de conversion de puissance **(16)** est dans la première configuration pour la tension alternative.

15. Système embarqué de conversion de puissance pour un engin mobile de transport selon l'une quelconque des revendications précédentes, **caractérisé en ce qu'**il comporte des moyens d'interruption aval du courant électrique, par exemple sous la forme d'un interrupteur aval **(50),** entre d'une part l'ensemble des tranches de conversion du système embarqué de conversion qui, dans la seconde configuration pour la tension continue, sont reliées au second circuit de connexion et d'autre part une portion de retour du second circuit de connexion **(26),** lesdits moyens d'interruption étant ouverts dans la première configuration pour tension alternative et fermés dans la seconde configuration pour la tension continue.

## Patentansprüche

1. Bordsystem zur Umwandlung elektrischer Energie unter Mittelspannung für eine mobile Transportmaschine (10), die ein Antriebsbordsystem beinhaltet, das mindestens einen elektrischen Antriebsmotor (20) aufweist, von der Art, bei der das Bordsystem zur Umwandlung (16):
- sich an Bord der mobilen Transportmaschine (10) befindet und nachgeschaltet eine Antriebsgleichspannung an das Antriebssystem liefert,
- dazu geeignet ist, bei einer Verschiebung der mobilen Transportmaschine in mechanischem und elektrischem Kontakt entweder in einer Ausgestaltung für Wechselspannung, mit einem festen linearen Kontakt (14), der mit einer ersten festen Quelle für elektrische Netzspannung verbunden ist, die eine mittlere Wechselspannung bereitstellt, oder in einer Ausgestaltung für Gleichspannung zu sein, mit einem festen linearen Kontakt (14), der mit einer zweiten festen Quelle für elektrische Netzspannung verbunden ist, die eine mittlere Gleichspannung bereitstellt, wobei der feste lineare Kontakt, die erste feste Quelle und die zweite feste Quelle kein Teil des Bordsystems zur Umwandlung sind,
- in der Ausgestaltung für Wechselspannung eine erste elektrische Verbindungsschaltung (22) beinhaltet, die vorgeschaltet mindestens einen Bordkontakt (24) umfasst, der dazu in der Lage ist, mechanisch und elektrisch mit dem festen linearen Kontakt (14) in Kontakt zu treten,
- in der Ausgestaltung für Gleichspannung eine zweite elektrische Verbindungsschaltung (26) beinhaltet, die vorgeschaltet mindestens einen Bordkontakt (28) umfasst, der dazu in der Lage ist, mechanisch und elektrisch mit dem festen linearen Kontakt (14) in Kontakt zu treten, der mit der zweiten festen Quelle für elektrische Netzspannung verbunden ist,
- mehrere Umwandlungswafer (38.i) beinhaltet, die jeweils eine vordere Stufe (34) zur Umwandlung von Wechselstrom-Gleichstrom aufweisen, die über eine vordere Seite elektrisch mit der ersten Verbindungsschaltung (22) verbunden ist, wobei die vorderen Stufen zur Umwandlung von Wechselstrom-Gleichstrom (34) über ihre vordere Seite (341) in der ersten Verbindungsschaltung (22) elektrisch in Reihe verbunden sind,
**dadurch gekennzeichnet, dass** das Bordsystem zur Umwandlung (16) für jeden Umwandlungswafer (38.i) zwischen der vorderen Stufe (34) zur Umwandlung von Wechselstrom-Gleichstrom und dem Antriebssystem (18) eine isolierte hintere Stufe (36) zur Umwandlung von Gleichstrom-Gleichstrom beinhaltet, wobei die vordere Stufe zur Umwandlung von Wechselstrom-Gleichstrom und die isolierte hintere Stufe zur Umwandlung von Gleichstrom-Gleichstrom jedes Umwandlungswafers jeweils über eine vordere Seite und über eine hintere Seite auf Höhe einer Zwischenverbindung (40.i, 42.i) unter Gleichspannung miteinander verbunden sind,
dass die zweite Verbindungsschaltung (26) in der Ausgestaltung für Gleichspannung ermöglicht, einen, mehrere oder alle Umwandlungswafer (38.i) des Bordsystems zur Umwandlung (16) zwischen der vorderen Stufe zur Umwandlung von Wechselstrom-Gleichstrom und der isolierten hinteren Stufe zur Umwandlung von Gleichstrom-Gleichstrom auf Höhe der Zwischenverbindung (40.i, 42.i) unter Gleichspannung mit der zweiten festen Quelle für elektrische Spannung zu verbinden, die eine mittlere Gleichspannung bereitstellt,
wobei die isolierten hinteren Stufen zur Umwandlung von Gleichstrom-Gleichstrom (36) über ihre vordere Seite (361) in der zweiten Verbindungsschaltung (26) elektrisch in Reihe verbunden sind,
wobei als Alternative:
- entweder alle Umwandlungswafer des Systems zur Umwandlung über die vordere Seite (361) ihrer hinteren Stufe zur Umwandlung von Gleichstrom-Gleichstrom (36) in der gleichen zweiten elektrischen Verbindungsschaltung (26) zwischen dem zweiten Bordschütz (28, 30) und einem Rückabschnitt dieser zweiten elektrischen Verbindungsschaltung (26) elektrisch in Reihe verbunden sind,
- oder die Umwandlungswafer (38.i) auf mehrere Reihen aufgeteilt sind und die zweite Verbindungsschaltung ebenso viele Zweige (26a, 26b), die elektrisch parallel zueinander sind, wie die Anzahl an Reihen von Umwandlungswafern beinhaltet und für jede Reihe von Umwandlungswafern die isolierten hinteren Stufen zur Umwandlung von Gleichstrom-Gleichstrom (36) über ihre vordere Seite (361) in dem entsprechenden Zweig (26a, 26b) der zweiten Verbindungsschaltung elektrisch in Reihe verbunden sind.

2. Bordsystem zur Umwandlung von Energie für eine mobile Transportmaschine nach Anspruch 1, **dadurch gekennzeichnet, dass** für zwei Umwandlungswafer (38.i), für die die isolierten hinteren Stufen zur Umwandlung von Gleichstrom-Gleichstrom (36) in der zweiten Verbindungsschaltung (26) konsekutiv in Reihe elektrisch verbunden sind, ein elektrischer Schalter (44.i) in die zweite Verbindungsschaltung (26) zwischen zwei Wafer (38.i) eingefügt ist.

3. Bordsystem zur Umwandlung von Energie für eine mobile Transportmaschine nach einem der Ansprüche 1 oder 2, **dadurch gekennzeichnet, dass** für die Umwandlungswafer (38.i), die zu einer gleichen Reihe gehören, die vorderen Stufen zur Umwandlung von Wechselstrom-Gleichstrom (34) in der ersten Verbindungsschaltung (22) konsekutiv in Reihe elektrisch verbunden sind, und dass für zwei Umwandlungswafer (38.i), die zu zwei unterschiedlichen Reihen gehören, aber für die die vorderen Stufen zur Umwandlung von Wechselstrom-Gleichstrom (34) in der ersten Verbindungsschaltung (22) konsekutiv in Reihe elektrisch verbunden sind, ein elektrischer Schalter (52) in die erste Verbindungsschaltung (22) zwischen die zwei Umwandlungswafer (38.i) eingefügt ist.

4. Bordsystem zur Umwandlung von Energie für eine mobile Transportmaschine nach einem der vorhergehenden Ansprüche, **dadurch gekennzeichnet, dass** das Bordsystem zur Umwandlung (16) mehrere Umwandlungswafer (38.i) beinhaltet, die jeweils eine vordere Stufe zur Umwandlung von Wechselstrom-Gleichstrom (34) und eine isolierte hintere Stufe zur Umwandlung von Gleichstrom-Gleichstrom (36) aufweisen, und dass mehrere der oder alle isolierten hinteren Stufen zur Umwandlung von Gleichstrom-Gleichstrom (36) über ihre hintere Seite (362) parallel elektrisch miteinander verbunden sind.

5. Bordsystem zur Umwandlung von Energie für eine mobile Transportmaschine nach einem der vorhergehenden Ansprüche, **dadurch gekennzeichnet, dass** die erste Verbindungsschaltung (22) einen dedizierten ersten Bordkontakt (24) für die Verbindung mit der ersten Spannungsquelle beinhaltet und die zweite Verbindungsschaltung (26) einen zweiten dedizierten Bordkontakt (28) für die Verbindung mit der zweiten Spannungsquelle beinhaltet, der sich von dem ersten Bordkontakt (24) unterscheidet, oder dass die erste Verbindungsschaltung (22) und die zweite Verbindungsschaltung (26) einen gemeinsamen Bordkontakt (24, 28) für die Verbindung der ersten oder der zweiten Spannungsquelle miteinander beinhalten.

6. Bordsystem zur Umwandlung von Energie für eine mobile Transportmaschine nach Anspruch 5, **dadurch gekennzeichnet, dass** die zweite Verbindungsschaltung (26) Mittel zur Unterbrechung des elektrischen Stroms (48) zwischen dem Bordkontakt (28) und der Gesamtheit der Umwandlungswafer (38.i) des Bordsystems zur Umwandlung (16) beinhaltet, die mit der zweiten Verbindungsschaltung (26) verbunden sind.

7. Bordsystem zur Umwandlung von Energie für eine mobile Transportmaschine nach einem der vorhergehenden Ansprüche, **dadurch gekennzeichnet, dass** jede vordere Stufe zur Umwandlung von Wechselstrom-Gleichstrom (34) und jede isolierte hintere Stufe zur Umwandlung von Gleichstrom-Gleichstrom (36) jeweils eine vordere Seite (341, 361) mit vorderen Anschlüssen (3411, 3412, 3611, 3612) und eine hintere Seite (342, 362) mit hinteren Anschlüssen (3421, 3422, 3621, 3622) beinhaltet, und dass in einem Umwandlungswafer die hinteren Anschlüsse (3421, 3422) der vorderen Stufe zur Umwandlung von Wechselstrom-Gleichstrom (34) jeweils mit einem der vorderen Anschlüsse (3611, 3612) der isolierten hinteren Stufe zur Umwandlung von Gleichstrom-Gleichstrom (36) des entsprechenden Umwandlungswafers (38.i) verbunden sind.

8. Bordsystem zur Umwandlung von Energie für eine mobile Transportmaschine nach Anspruch 7, **dadurch gekennzeichnet, dass** für jeden Umwandlungswafer (38.i) ein elektrischer Filter (46) elektrisch parallel zu zwei vorderen Anschlüssen (3611, 3612) der vorderen Seite (361) der isolierten hinteren Stufe zur Umwandlung von Gleichstrom-Gleichstrom (36) angeordnet ist.

9. Bordsystem zur Umwandlung von Energie für eine mobile Transportmaschine nach einem der vorhergehenden Ansprüche, **dadurch gekennzeichnet, dass** für jeden Umwandlungswafer (38.i) die isolierte hintere Stufe zur Umwandlung von Gleichstrom-Gleichstrom (36) in der Form der Verbindung umgesetzt ist:
- vorgeschaltet eines primären Gleichstrom-Wechselstrom-Wandlers (36A), der eine kontinuierliche vordere Seite aufweist, die die vordere Seite (361) der isolierten hinteren Stufe zur Umwandlung von Gleichstrom-Gleichstrom (36) bildet, und eine alternative hintere Seite,
- eines Transformators (36B), der eine primäre Wicklung, die auf der hinteren Seite des primären Wandlers verbunden ist, und eine sekundäre Wicklung aufweist,
- nachgeschaltet einen sekundären Wandler (36C), der eine alternative vordere Seite aufweist, die mit der sekundären Wicklung des Transformators verbunden ist, und eine kontinuierliche hintere Seite, die die hintere Seite (362) der isolierten hinteren Stufe zur Umwandlung von Gleichstrom-Gleichstrom (36) bildet.

10. Bordsystem zur Umwandlung von Energie für eine mobile Transportmaschine nach einem der vorhergehenden Ansprüche, **dadurch gekennzeichnet, dass** die Zwischenverbindung zwischen der vorderen Stufe 34 und der hinteren Stufe 36 zur Umwandlung von Energie eines gleichen Umwandlungswafers aus Zwischenpolen unter Gleichspannung gebildet ist, und dass für jeden Energieumwandlungswafer ein erster Zwischenpol (40, 40.1, 40.2, ... , 40.n) direkt oder indirekt mit einem vorderen Abschnitt der zweiten Verbindungsschaltung (26) der Seite des Bordkontakts (28, 30) dieser zweiten Verbindungsschaltung (26) verbunden ist und ein zweiter Zwischenpol (42, 42.1, ... , 42.n) direkt oder indirekt mit einem hinteren Abschnitt der zweiten Verbindungsschaltung (26) der Seite des Rückabschnitts dieser zweiten Schaltung (26) verbunden ist.

11. Bordsystem zur Umwandlung von Energie für eine mobile Transportmaschine nach einem der vorhergehenden Ansprüche, **dadurch gekennzeichnet, dass** für jeden Energieumwandlungswafer die hintere Seite (342) der vorderen Stufe zur Umwandlung von Energie aus zwei, drei oder mehreren hinteren Verbindungsanschlüssen (3421, 3422) der vorderen Stufe gebildet ist, die jeweils elektrisch mit einem entsprechenden vorderen Anschluss (3611, 3612) der hinteren Stufe zur Umwandlung von Energie (36) des betrachteten Umwandlungswafers verbunden sind, sodass ein hinterer Anschluss (3421, 3422) der vorderen Stufe (34) und der vordere Anschluss (3611, 3612) der hinteren Stufe (36), der elektrisch damit verbunden ist, einen Zwischenpol zwischen der vorderen Stufe (34) und der hinteren Stufe (36) bilden.

12. Bordsystem zur Umwandlung von Energie für eine mobile Transportmaschine nach einem der vorhergehenden Ansprüche, **dadurch gekennzeichnet, dass** es für jeden Energieumwandlungswafer eine Zwischenverbindung gibt, die aus zwei Zwischenpolen (40, 40.1, 40.2, ... , 40.i, ... , 40.n, 42, 42.1, ... , 42.i, ... , 42.n) oder mehr als zwei Zwischenpolen gebildet ist, zwischen denen eine Gleichspannung besteht.

13. Bordsystem zur Umwandlung von Energie für eine mobile Transportmaschine nach einem der vorhergehenden Ansprüche, **dadurch gekennzeichnet, dass** in der Ausgestaltung für Wechselspannung das System auf Höhe der Zwischenpole eine elektrische Isolierung zwischen den unterschiedlichen Umwandlungswafern aufweist.

14. Bordsystem zur Umwandlung von Energie für eine mobile Transportmaschine nach einem der vorhergehenden Ansprüche, **dadurch gekennzeichnet, dass** für zwei Umwandlungswafer, für die die isolierten hinteren Stufen zur Umwandlung von Gleichstrom-Gleichstrom (36) konsekutiv in Reihe in der zweiten Verbindungsschaltung (26) elektrisch verbunden sind, ein elektrischer Schalter (44.1, 44.2, ... , 44.(n-1)) in die zweite Verbindungsschaltung (26) zwischen die zwei betrachteten Umwandlungswafer eingefügt ist, wobei diese Schalter (44.1, 44.2, ... , 44.(n-1)) geschlossen sind, wenn sich das System zur Umwandlung von Energie in der zweiten Ausgestaltung für die Gleichspannung befindet, aber offen, wenn sich das System zur Umwandlung von Energie (16) in der ersten Ausgestaltung für die Wechselspannung befindet.

15. Bordsystem zur Umwandlung von Energie für eine mobile Transportmaschine nach einem der vorhergehenden Ansprüche, **dadurch gekennzeichnet, dass** es hintere Mittel zur Unterbrechung des elektrischen Stroms beinhaltet, zum Beispiel in der Form eines hinteren Schalters (50) zwischen einem Teil der Gesamtheit der Umwandlungswafer des Bordsystems zur Umwandlung, die in der zweiten Ausgestaltung für die Gleichspannung mit der zweiten Verbindungsschaltung verbunden sind, und andererseits einem Rückabschnitt der zweiten Verbindungsschaltung (26), wobei die Mittel zur Unterbrechung in der ersten Ausgestaltung für Wechselspannung offen sind und in der zweiten Ausgestaltung für die Gleichspannung geschlossen sind.

## Claims

1. An on-board system for converting medium-voltage electric power for a movable transport machine (10) including an on-board traction system having at least one electric traction motor (20), of the type in which the on-board conversion system (16):
- is on board the movable transport machine (10) and delivers, downstream, a DC traction voltage to the traction system,
- is adapted, during a displacement of the movable transport machine, to be in mechanical and electrical contact either, in a configuration for AC voltage, with a fixed linear contact (14) linked to a first fixed electrical mains voltage source, providing an AC medium voltage, or, in a configuration for DC voltage, with a fixed linear contact (14) linked to a second fixed electrical mains voltage source, providing a DC medium voltage, the fixed linear contact, the first fixed source and the second fixed source not forming part of the on-board conversion system,
- includes, in the configuration for AC voltage, a first electrical connection circuit (22) comprising, upstream, at least one on-board contact (24) capable of coming into mechanical and electrical contact with the fixed linear contact (14),
- includes, in the configuration for DC voltage, a second electrical connection circuit (26) comprising, upstream, at least one on-board contact (28) capable of coming into mechanical and electrical contact with the fixed linear contact (14) linked to the second fixed electrical mains voltage source,
- includes several conversion blocks (38.i) each having an AC-DC power conversion upstream stage (34) electrically linked, via an upstream side, to the first connection circuit (22), the AC-DC power conversion upstream stages (34) are electrically connected in series, via their upstream side (341), in the first connection circuit (22),
**characterized in that** the on-board conversion system (16) includes, for each conversion block (38.i), between the AC-DC power conversion upstream stage (34) and the traction system (18), an isolated DC-DC power conversion downstream stage (36), the AC-DC power conversion upstream stage and the isolated DC-DC power conversion downstream stage of each conversion block being linked to each other, respectively via an upstream side and via a downstream side, at an intermediate DC voltage connection (40.i, 42.i);
**in that** the second connection circuit (26) allows, in the configuration for DC voltage, connecting one, several or all of the conversion blocks (38.i) of the on-board conversion system (16), between the AC-DC power conversion upstream stage and the isolated DC-DC power conversion downstream stage, at the intermediate DC voltage connection (40.i, 42.i), to the second fixed electrical voltage source providing a DC medium voltage;
the isolated DC-DC power conversion downstream stages (36) are electrically connected in series, via their upstream side (361), in the second connection circuit (26)
with, as an alternative:
- either all of the conversion blocks of the conversion system are electrically connected in series, via the upstream side (361) of their DC-DC power conversion downstream stage (36), in the same second electrical connection circuit (26), between the second on-board contactor (28, 30) and a return portion of this second electrical connection circuit (26),
- or the conversion blocks (38.i) are distributed into several series, and the second connection circuit includes as many branches (26a, 26b), electrically in parallel with each other, as the number of series of conversion blocks and, for each series of conversion blocks, the isolated DC-DC power conversion downstream stages (36) are electrically connected in series, via their upstream side (361), in the corresponding branch (26a, 26b) of the second connection circuit.

2. The on-board system for converting power for a movable transport machine according to claim 1, **characterized in that** for two conversion blocks (38.i) for which the isolated DC-DC power conversion downstream stages (36) are electrically connected consecutively in series in the second connection circuit (26), an electric switch (44.i) is interposed in the second connection circuit (26) between two blocks (38.i).

3. The on-board system for converting power for a movable transport machine according to any one of claims 1 or 2, **characterized in that**, for the conversion blocks (38.i) belonging to the same series, the AC-DC power conversion upstream stages (34) are consecutively connected electrically in series in the first connection circuit (22), and **in that**, for two conversion blocks (38.i) belonging to two distinct series but for which the AC-DC power conversion upstream stages (34) are consecutively connected electrically in series in the first connection circuit (22), an electric switch (52) is interposed in the first connection circuit (22) between the two conversion blocks (38.i).

4. The on-board system for converting power for a movable transport machine according to any one of the preceding claims, **characterized in that** the on-board conversion system (16) includes several conversion blocks (38.i) each having an AC-DC power conversion upstream stage (34) and an isolated DC-DC power conversion downstream stage (36), and **in that** a plurality or all of the isolated DC-DC power conversion downstream stages (36) are electrically connected to each other in parallel via their downstream side (362).

5. The on-board system for converting power for a movable transport machine according to any one of the preceding claims, **characterized in that** the first connection circuit (22) includes a first dedicated on-board contact (24) for the connection to the first voltage source, and the second connection circuit (26) includes a second dedicated on-board contact (28) for the connection to the second voltage source, distinct from the first on-board contact (24), or **in that** the first connection circuit (22) and the second connection circuit (26) include a common on-board contact (24, 28) for the connection to either of the first or the second voltage source.

6. The on-board system for converting power for a movable transport machine according to claim 5, **characterized in that** the second connection circuit (26) includes means for interrupting the electric current (48) between the on-board contact (28) and the set of the conversion blocks (38.i) of the on-board conversion system (16) which are linked to the second connection circuit (26).

7. The on-board system for converting power for a movable transport machine according to any one of the preceding claims, **characterized in that** each AC-DC power conversion upstream stage (34) and each isolated DC-DC power conversion downstream stage (36) each includes an upstream side (341, 361), with upstream terminals (3411, 3412, 3611, 3612) and a downstream side (342, 362), with downstream terminals (3421, 3422, 3621, 3622), and **in that**, in a conversion block, the downstream terminals (3421, 3422) of the AC-DC power conversion upstream stage (34) are each linked respectively to one of the upstream terminals (3611, 3612) of the isolated DC-DC power conversion downstream stage (36) of the corresponding conversion block (38.i).

8. The on-board system for converting power for a movable transport machine according to claim 7, **characterized in that**, for each conversion block (38.i), an electric filter (46) is arranged electrically in parallel with two upstream terminals (3611, 3612) on the upstream side (361) of the isolated DC-DC power conversion downstream stage (36).

9. The on-board system for converting power for a movable transport machine according to any one of the preceding claims, **characterized in that**, for each conversion block (38.i), the isolated DC-DC power conversion downstream stage (36) is produced in the form of the association:
- upstream, of a DC-AC primary converter (36A) having a DC upstream side, forming the upstream side (361) of the isolated DC-DC power conversion downstream stage (36), and an AC downstream side;
- of a transformer (36B) having a primary winding, connected to the downstream side of the primary converter and a secondary winding,
- downstream, of a secondary converter (36C) having an AC upstream side connected to the secondary winding of the transformer, and a DC downstream side which forms the downstream side (362) of the isolated DC-DC power conversion downstream stage (36).

10. The on-board system for converting power for a movable transport machine according to any one of the preceding claims, **characterized in that** the intermediate connection between the power conversion upstream stage 34 and the power conversion downstream stage 36 of the same conversion block is formed of intermediate DC voltage poles, and **in that** for each power conversion block, a first intermediate pole (40, 40.1, 40.2, ..., 40.n) is linked, directly or indirectly, to an upstream portion of the second connection circuit (26) on the side of the on-board contact (28, 30) of this second connection circuit (26), and a second intermediate pole (42, 42.1,, 42.n) is linked, directly or indirectly to a downstream portion of the second connection circuit (26), on the side of the return portion of this second circuit (26).

11. The on-board system for converting power for a movable transport machine according to any one of the preceding claims, **characterized in that**, for each power conversion block, the downstream side (342) of the power conversion upstream stage consists of two, three or more downstream connection terminals (3421, 3422) of the upstream stage which are electrically linked each respectively to a corresponding upstream terminal (3611, 3612) of the power conversion downstream stage (36) of the considered conversion block, such that a downstream terminal (3421, 3422) of the upstream stage (34) and the upstream terminal (3611, 5 3612) of the downstream stage (36) which is electrically linked thereto form an intermediate pole between the upstream stage (34) and the downstream stage (36).

12. The on-board system for converting power for a movable transport machine according to any one of the preceding claims, **characterized in that**, for each power conversion block, there is an intermediate connection formed of two intermediate poles (40, 40.1, 40.2, ..., 40.i, ..., 40.n, 42, 42.1, ..., 42.i, ..., 42.n), or more than two intermediate poles, between which a DC voltage is established.

13. The on-board system for converting power for a movable transport machine according to any one of the preceding claims, **characterized in that**, in the configuration for AC voltage, the system has, at the intermediate poles, an electrical insulation between the different conversion blocks.

14. The on-board system for converting power for a movable transport machine according to any one of the preceding claims, **characterized in that**, for two conversion blocks for which the isolated DC-DC power conversion downstream stages (36) are electrically connected consecutively in series in the second connection circuit (26), a switch (electrical switch 44.1, 44.2, ..., 44.(n-1)) is interposed in the second connection circuit (26) between the two considered conversion blocks, these switches (44.1, 44.2, ..., 44.(n-1)) being closed when the power conversion system is in the second configuration for the DC voltage, but open when the power conversion system (16) is in the first configuration for the AC voltage.

15. The on-board system for converting power for a movable transport machine according to any one of the preceding claims, **characterized in that** it includes means for interrupting, downstream, the electric current, for example in the form of a downstream switch (50), between on the one hand the set of the conversion blocks of the on-board conversion system which, in the second configuration for the DC voltage, are linked to the second connection circuit and on the other hand a return portion of the second connection circuit (26), said interruption means being open in the first configuration for the AC voltage and closed in the second configuration for the DC voltage.
